# EUROPEAN PATENT SPECIFICATION

(11) **EP 1 527 953 B1**
(45) Date of publication and mention of the grant of the patent: **30.08.2006**
(21) Application number: 04026024.2
(22) Date of filing: 03.11.2004
(51) Int. Cl.: B60R 9/055, B60R 9/045

(54) **Moveable stowage roof bin for vehicle**
Bewegbarer Dachcontainer für Fahrzeug
Coffre déplaçable de toit pour véhicle

(30) Priority: 03.11.2003 US 516920 P
(43) Date of publication of application: 04.05.2005
(73) Proprietor: JAC PRODUCTS, INC., Ann Arbor, MI 48108 (US)
(72) Inventor: Kmita, Gerard, J., MI 48101 (US); Traumbley, Claude, Macomb, MI 48044 (US); Aftanas, Jeffrey M., Ortonville, MI 48462 (US)
(74) Representative: Kraenzmer, Martin

(56) References cited:
- EP-A- 0 939 006
- US-A1- 2003 052 145
- US-A1- 2003 205 597

## Description

### FIELD OF THE INVENTION

This invention relates to article carrier assemblies for motor vehicles, and more particularly to a vehicle article carrier having a cargo supporting structure capable of being secured over a liftgate of a vehicle, and an integrally associated stowage bin that is moveable together with the cargo supporting structure, when the cargo supporting structure is moved between a first position over a roof of the vehicle at a second position over a liftgate of the vehicle.

### BACKGROUND OF THE INVENTION

Vehicle article carriers are used in a wide variety of vehicles to support cargo and various other articles above an outer body surface, such as a roof portion, of a vehicle. Typically, such systems include a pair of side rails or slats which are fixedly secured to the roof portion of the vehicle. Usually a pair of cross bars are secured to the side rails or slats to extend transversely therebetween. The cargo is then positioned on the cross bars and secured down via suitable securing straps or bungee cords so that the cargo is held securely on the article carrier while the vehicle is in use.

One drawback with any conventional vehicle article carrier system is the occasional difficulty of lifting cargo and other articles to be transported up onto the roof portion of the vehicle. This is particularly so if the vehicle is a sport utility vehicle or a mini van, in which case the roof thereof is often at a height which is higher than many individuals can reach easily when attempting to lift cargo onto the article carrier. Removing cargo from the vehicle article carrier can often be just as difficult depending, of course, on the specific cargo, its dimensions and its weight.

Some attempts have been made to overcome this problem by providing a vehicle article carrier which has some form of movable load supporting structure which can be disposed in a temporary position in which cargo can be more easily loaded thereunto. Such systems, for example, are illustrated in U.S. Patent Nos. 5,649,655; 5,505,579; and 5,417,358.

The systems illustrated in the above-mentioned patents typically suffer from one or more drawbacks. Often, such systems are complex to manufacture, and therefore costly. With some such devices, they cannot be left in a "lowered" position, but rather must be maintained in a retracted position on top of the vehicle roof. Some also do not allow for convenient opening of the liftgate of a vehicle when the cargo supporting portion is in its lowered position.

Still further, pre-existing article carrier systems do not incorporate an integrally formed stowage bin that can be moved with the article carrier, as the article carrier is moved between two or more positions. Such a moveable stowage bin would be highly useful for allowing easier access to the stowage bin.

Yet another drawback with such pre-existing article carrier systems as described above is the inability to remove the cargo supporting portion of the system when it is not needed. It would also be advantageous to be able to collapse the removed cargo supporting portion into a compact arrangement that could be stored in a duffle bag or other like implement and then stored in a garage, or even in the vehicle from which it was removed.

Accordingly, there exists a need in the relevant art to provide a vehicle article carrier having a cargo supporting structure which can be secured over the liftgate of a vehicle to thus allow cargo to be secured thereto without a user having to stand on a ladder or other implement, as with conventional roof mounted article carrier systems. Furthermore, there exists a need in the relevant art to provide a vehicle article carrier in which a cargo supporting structure is used to support cargo adjacent a liftgate of a vehicle, and which also permits the liftgate to be lifted and lowered without interference from the article carrier, and further which does not add an appreciable amount of weight to the liftgate. Still further, there exists a need in the relevant art to provide a vehicle article carrier having a cargo supporting structure which is mounted over a liftgate of a vehicle, and where the cargo supporting structure can be quickly and easily detached from the vehicle when the cargo supporting structure is not needed, and which can further be collapsed into a compact arrangement for storage.

EP 0 939 006 and US 2003/052145 discloses a vehicle article carrier for supporting articles on a vehicle, comprising a pair of side rails adapted to be fixedly secured generally parallel to one another on a roof portion of the vehicle, a pair of side supports slidably disposed on said side rails and a stowage bin fixedly secured to said side supports so as to overlay said roof portion of said vehicle.

### SUMMARY OF THE INVENTION

According to the principles of the present invention, an article carrier adapted to hold cargo and other articles adjacent a liftgate of a vehicle such as a sport utility vehicle, a station wagon, or minivan is provided having an advantageous construction. The article carrier includes a liftgate striker connectable to the liftgate of the vehicle and a bumper striker connectable to the bumper of the vehicle. A first link is pivotally connected to the roof support structure of the motor vehicle and a second link is pivotally coupled to the first link. A locking assembly is coupled to the second link and is operable in a closed position to couple the second link to the bumper striker. In an opened position, the locking assembly releases the bumper striker in response to contact from the liftgate striker to enable the quick and convenient raising of the liftgate without the need to first unlatch the article carrier from the bumper.

In an alternative preferred embodiment of the present invention a stowage bin is coupled to a pair of moveable supports. The moveable supports are in turn operatively and pivotally coupled to a cargo supporting structure that is adapted to rest over a rear liftgate of a motor vehicle. The article carrier is moveable between a first position wherein the cargo supporting structure and the stowage bin are positioned over a roof of the vehicle, with the stowage bin being disposed closely adjacent a forward longitudinal end of the vehicle roof, and a second position wherein the cargo supporting structure is disposed over the rear liftgate and the stowage bin is positioned over the vehicle roof closely adjacent an upper edge of the rear liftgate. Thus, the stowage bin is more readily accessible when the vehicle article carrier is in its second position described above. Articles may be placed within the stowage bin and secured thereto by conventional straps, bungee cords, etc. The stowage bin is especially well adapted for carrying duffel bags and other like cargo and is relatively light in weight yet bulky and space consuming when stored in an interior of a motor vehicle.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view of a rear portion of a vehicle illustrating a first embodiment of a multi-position, articulating, article carrier apparatus secured to the outer body surface of the vehicle, with the apparatus in a first or lowered position;

Figure 2 is a view of the apparatus and vehicle shown in Figure 1 with the apparatus disposed in an intermediate position about to be urged over a roof portion of the vehicle;

Figure 3 is a plan view of the apparatus of Figure 1 showing the apparatus in a second position in which a cargo supporting structure thereof is disposed over the roof portion of the vehicle;

Figure 4 is a perspective view of one of the latching assemblies secured to a support beam on the rear bumper of the vehicle of Figure 1;

Figure 5 is a cross sectional side view of the free end of the cargo supporting structure secured to the latching assembly, taken in accordance with section line 5-5 in Figure 1;

Figure 6 is a cross sectional side view of the latching assembly of Figure 5 with the lower locking assembly of the cargo supporting structure unlatched therefrom and ready to be lifted away from the bumper;

Figure 6a is a fragmentary side, cross-sectional view of the latching lever of Figure 5 engaging the latching assembly as the latching lever is urged into the latching assembly;

Figure 7 is a perspective fragmentary view of a portion of the torque rod assembly of the cargo supporting structure illustrating one of the lower locking assemblies at one end of the torque rod assembly;

Figure 8 is a cross sectional view of a portion of the torque rod assembly shown in Figure 7 taken in accordance with section line 8-8 in Figure 7;

Figure 9 is a cross sectional view of the torque rod assembly taken in accordance with section line 9-9 in Figure 8;

Figure 10 is a plan view of the rear portion of one of the side rails also showing the articulating assembly and a small portion of the cargo supporting structure;

Figure 11 is a perspective view of the articulating assembly and the rearmost end portion of one of the side rails;

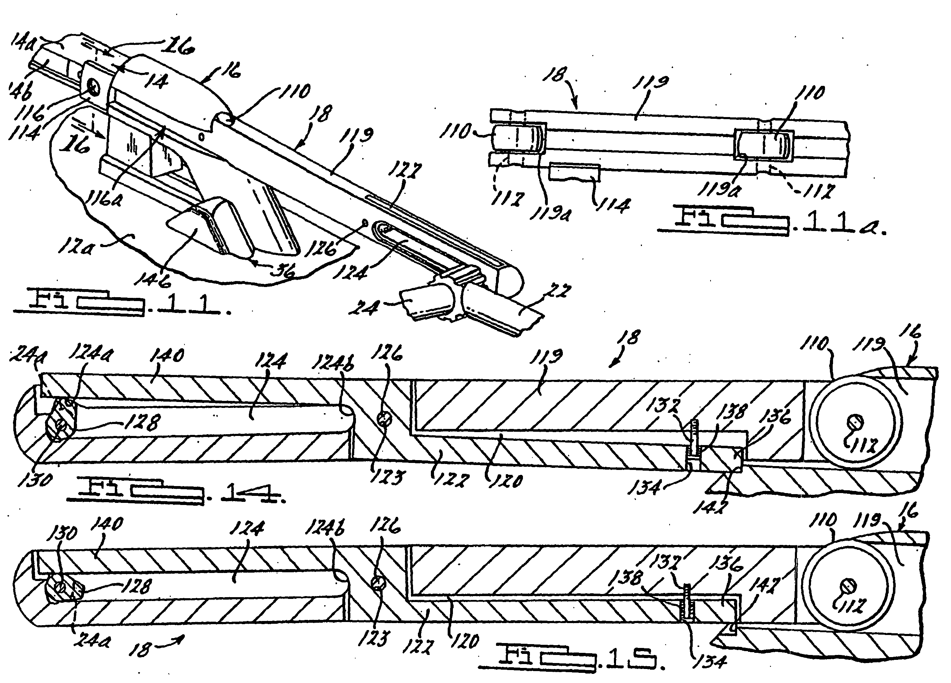

Figure 11 a is a plan view of an end portion of the articulating assembly illustrating the pair of rollers that are used for enabling rolling movement of the articulating assembly along its associated side rail;

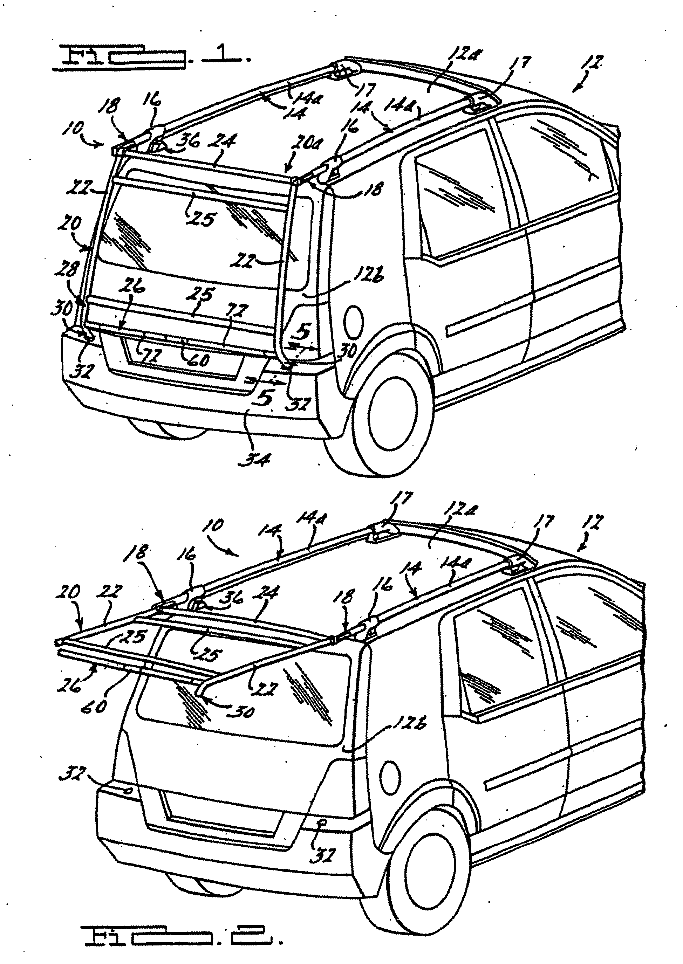

Figure 12 is a side view of the articulating assembly when the cargo supporting structure is disposed in the lowered position shown in Figure 1;

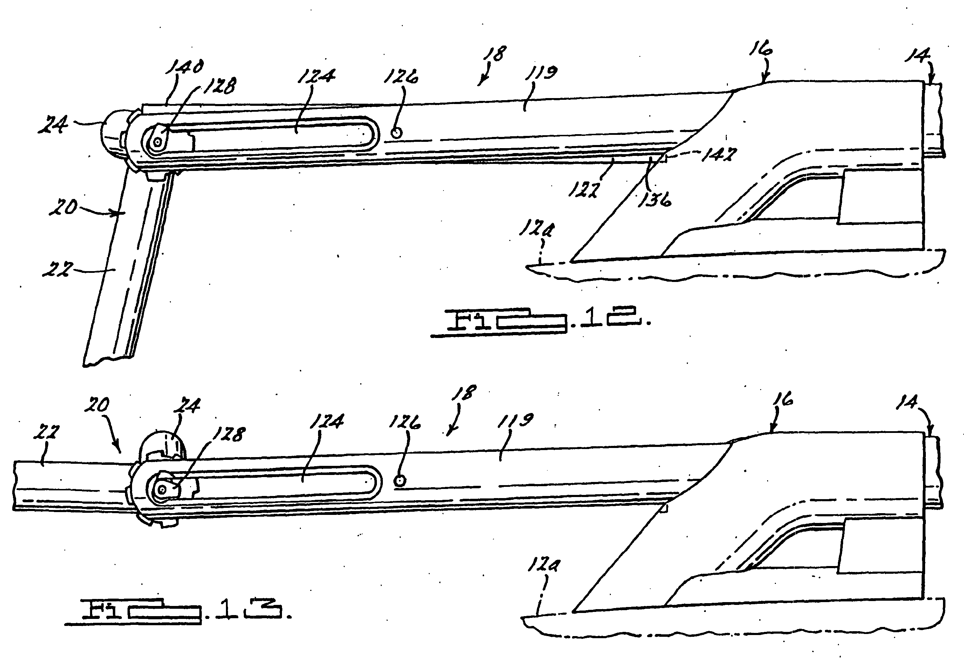

Figure 13 is a side view of the articulating assembly when the cargo supporting structure is moved into the intermediate position shown in Figure 2;

Figure 14 is a cross sectional side view of the articulating assembly in accordance with section line 14-14 in Figure 10, when the cargo supporting structure is in the lowered position of Figure 1;

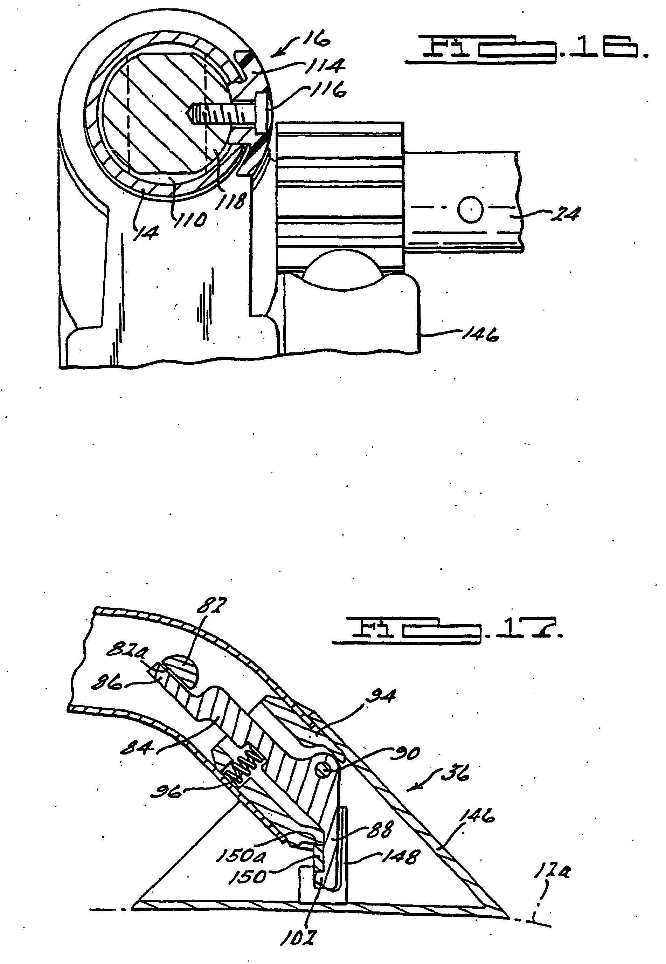

Figure 15 is a cross sectional side view of the articulating assembly of Figure 14 with the cargo supporting structure raised into the intermediate position of Figure 2;

Figure 16 is a partial cross sectional view of the side rail taken in accordance with section line 16-16 in Figure 11;

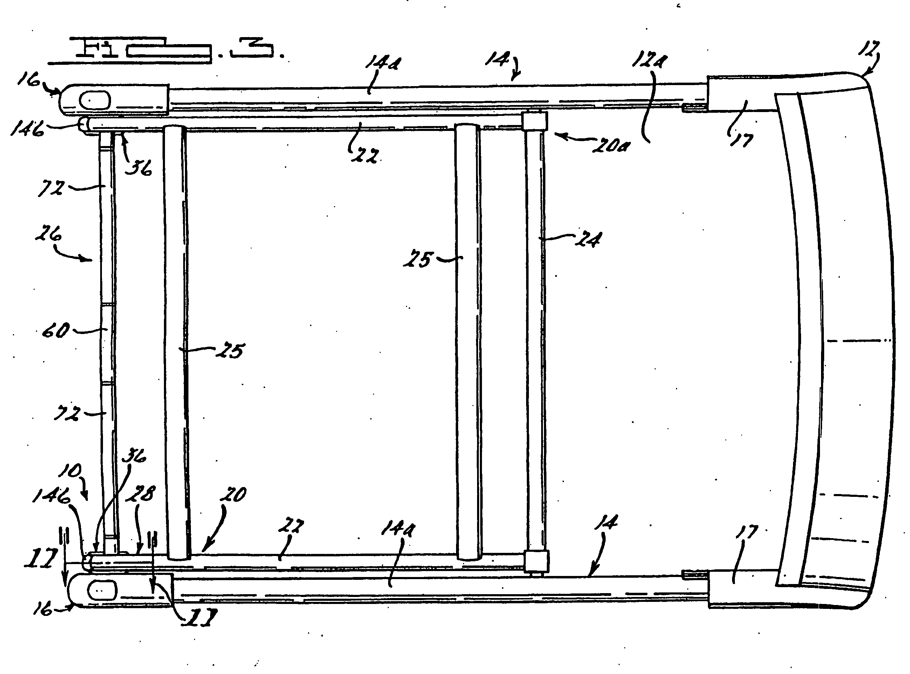

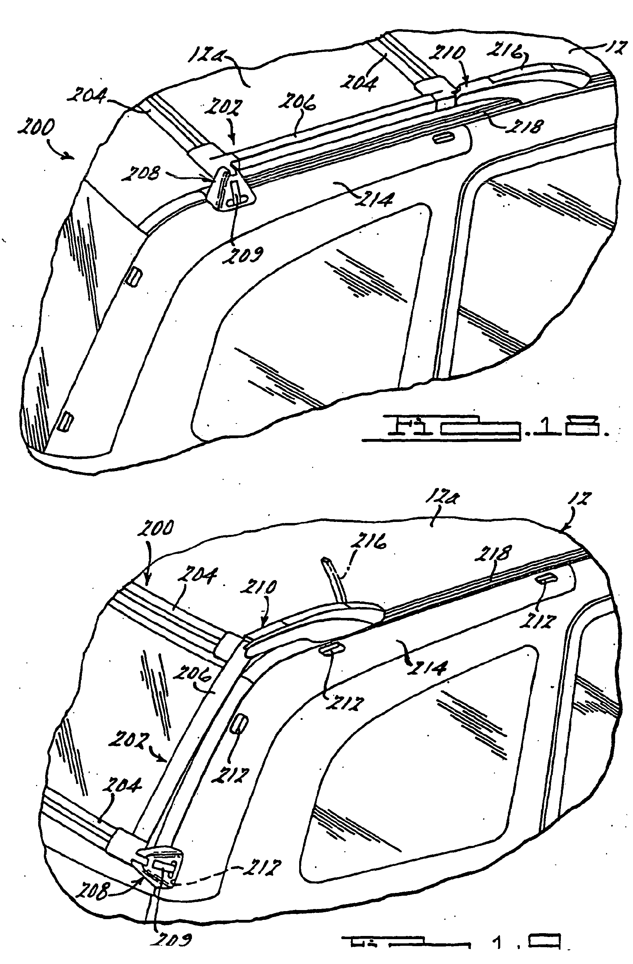

Figure 17 is a cross sectional side view of the upper locking assembly of one of the rear supports, taken in accordance with section line 17-17 in Figure 3;

Figure 18 is a perspective view of an alternative;

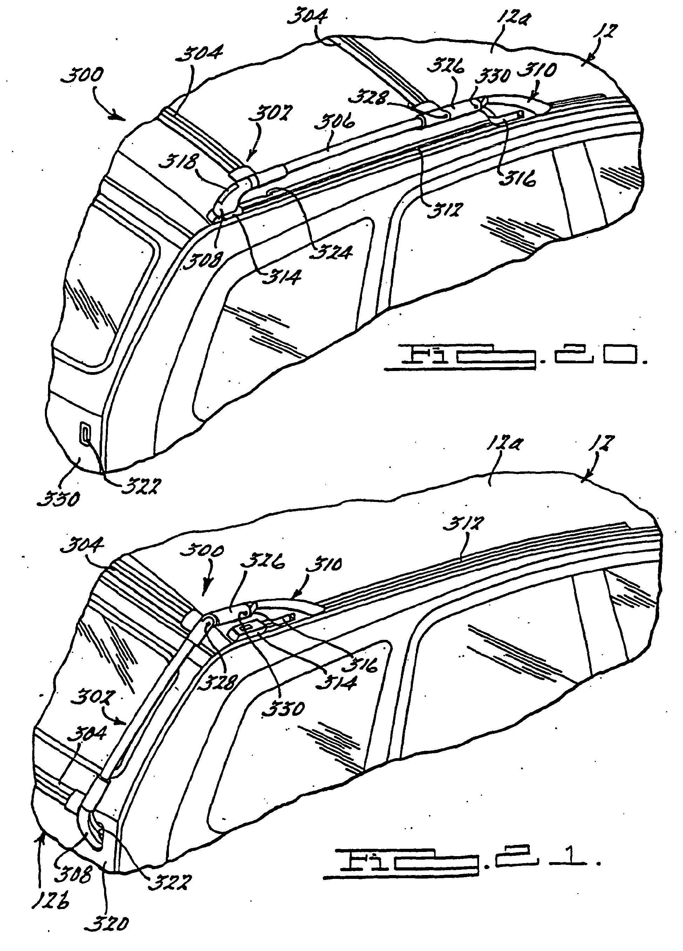

Figure 19 is a perspective view of the article carrier of Figure 18 with the cargo supporting structure thereof in a lowered position;

Figure 20 is a perspective view of another alternative;

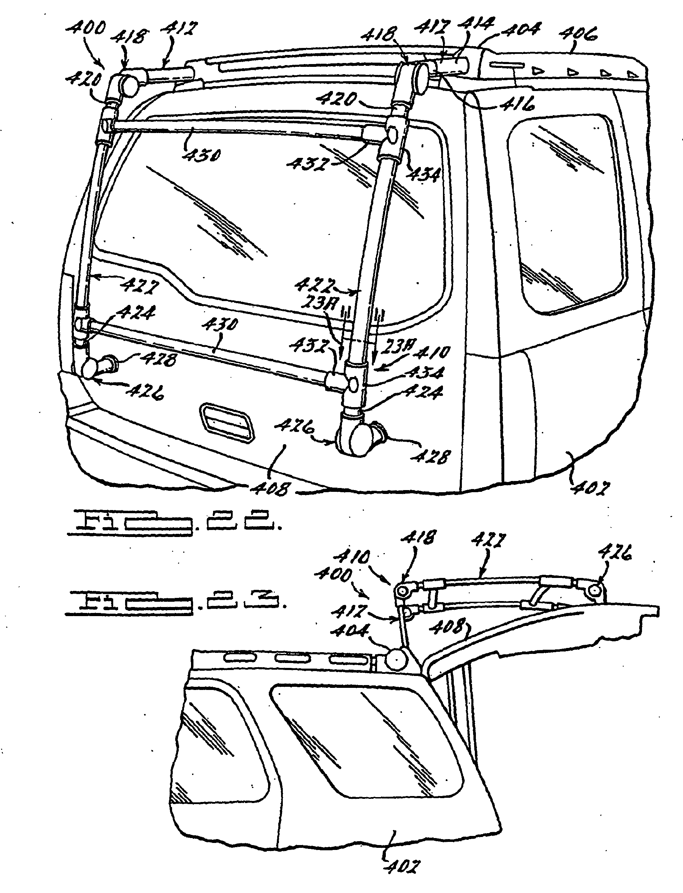

Figure 21 is a perspective view of the article carrier of Figure 20 with the cargo supporting structure thereof in the lowered position;

Figure 22 is a perspective view of another alternative embodiment of the article carrier;

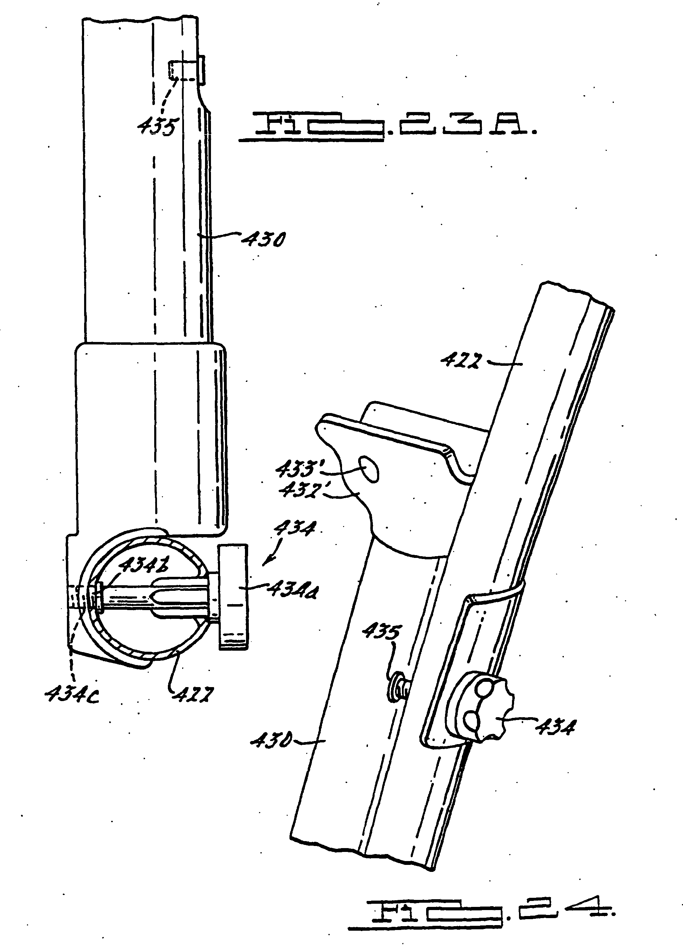

Figure 23 is a side view of the article carrier shown in Figure 22 but with the liftgate of the vehicle in the open position;

Figure 23A is a cross sectional end view taken in accordance with section line 23A-23A in Figure 22;

Figure 24 is a perspective view of a portion of one of the main support members showing one of the cross bars secured thereto in a storage arrangement when the article carrier is not being used and is removed from the vehicle;

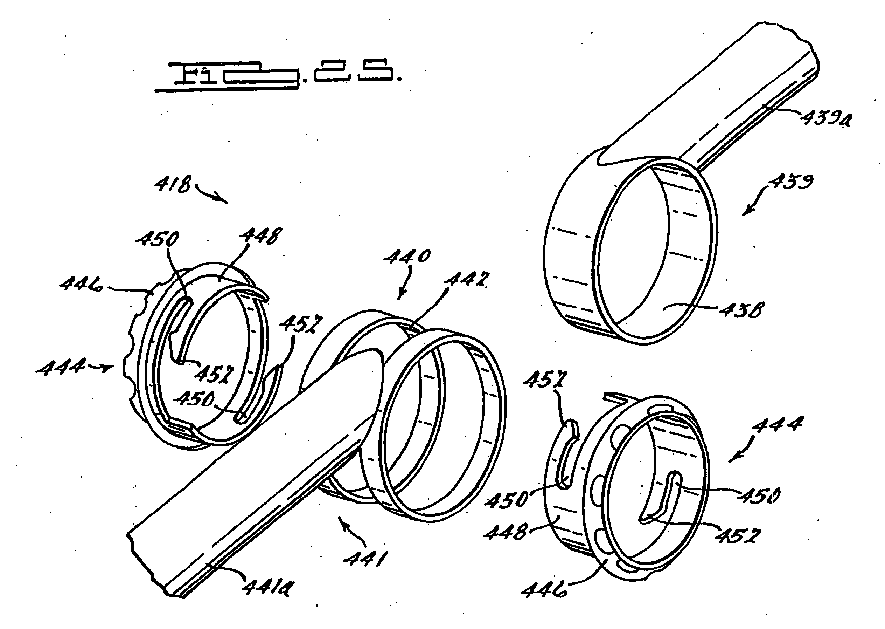

Figure 25 is an exploded perspective view of the components comprising the upper pivot assembly;

Figure 26 is a perspective view of an alternative embodiment of the pivot assembly;

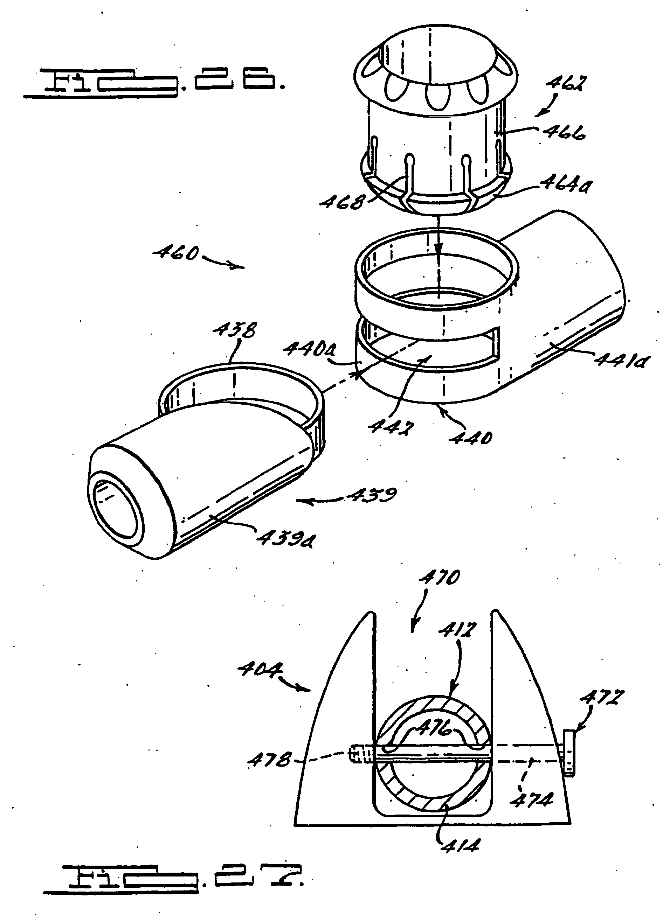

Figure 27 is an end view of one of the supports showing a portion of one of the upper coupling links pivotally coupled thereto;

Figure 28 is an exploded perspective view of one of the anchor assemblies fixedly attached to the rear liftgate;

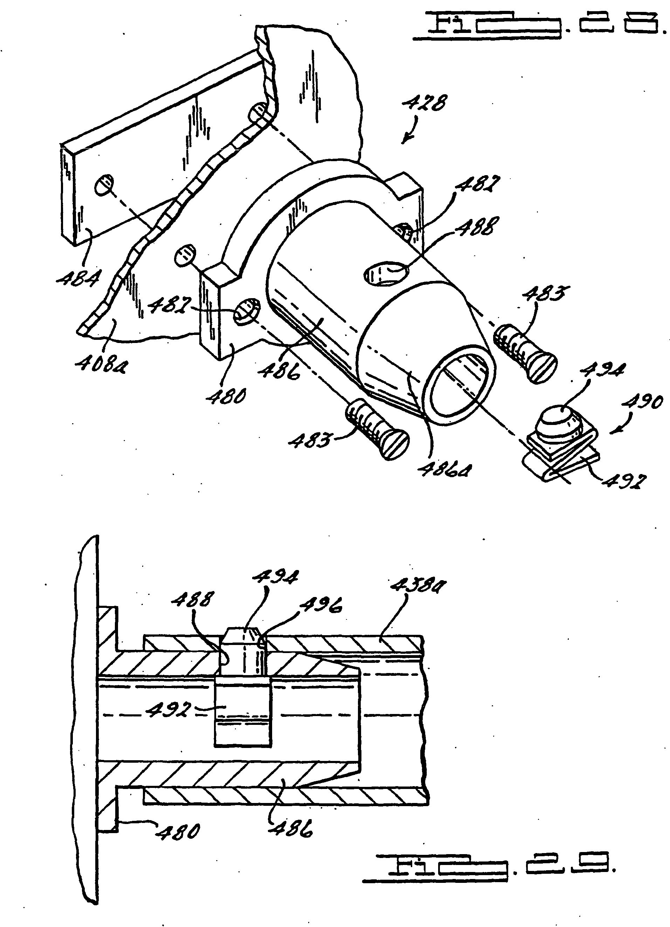

Figure 29 is a side cross sectional view of a portion of the lower pivot assembly engaged with the anchor assembly;

Figure 30 is a perspective view of a rear portion of a vehicle illustrating a yet another embodiment of a multi-position, articulating, article carrier apparatus secured to the outer body surface of the vehicle with the apparatus in a first or lowered position;

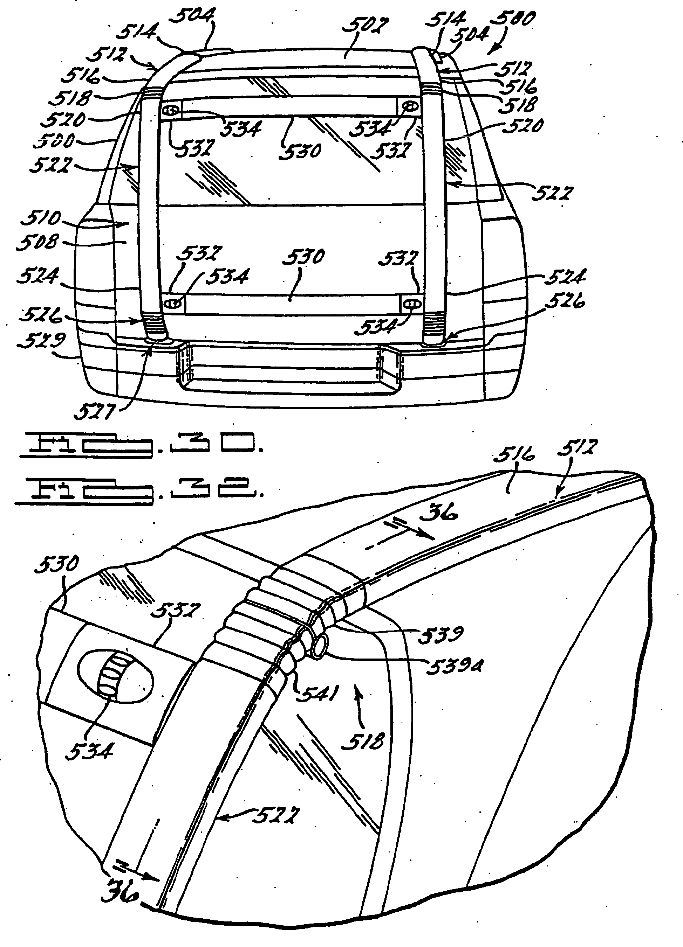

Figure 31 is a side cross sectional view of the apparatus of Figure 30, with portions removed for clarity;

Figure 32 is an enlarged perspective view of an alternative embodiment of the pivot assembly;

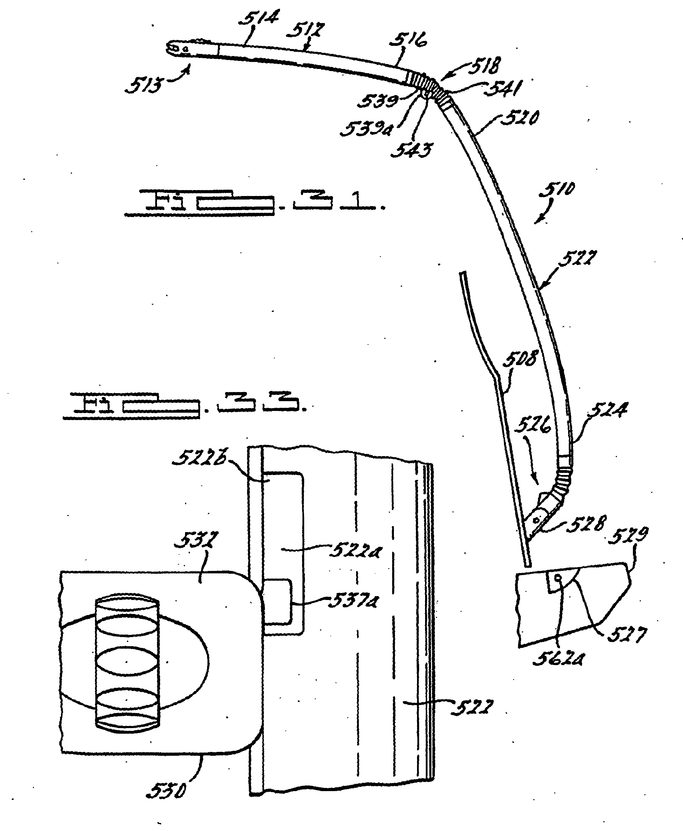

Figure 33 is an enlarged perspective view of an alternative embodiment of the locking engagement between a cross member and a main support member, with portions removed for clarity;

Figure 34 is an enlarged perspective view, with portions hidden, of the end of an alternative embodiment of the cross member;

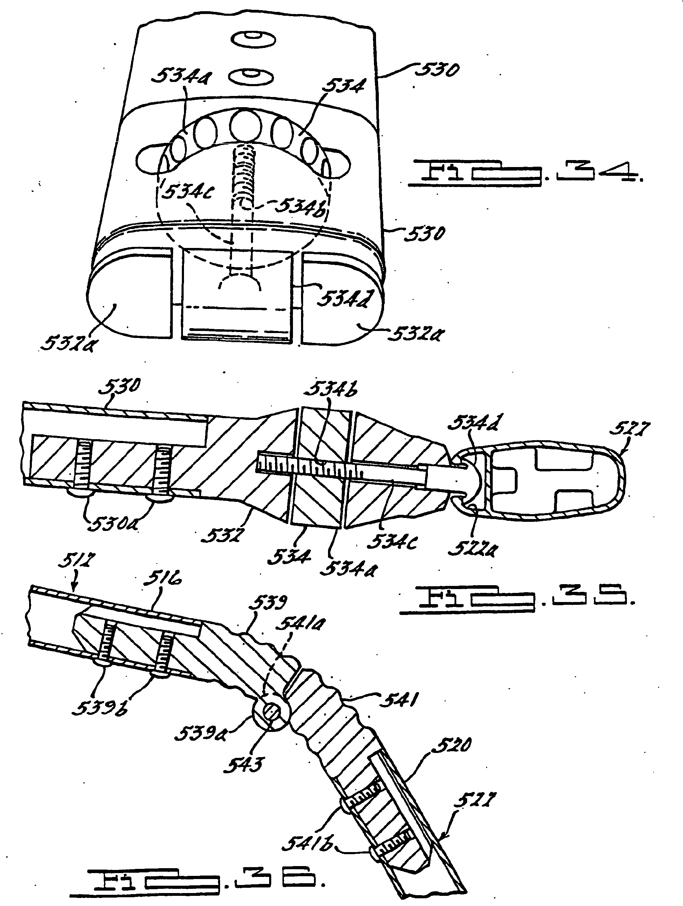

Figure 35 is a side cross sectional view of the alternative embodiment of the cross member;

Figure 36 is a side cross sectional view of the alternative embodiment of the pivot assembly, taken in accordance with section line 35-35 of Figure 32;

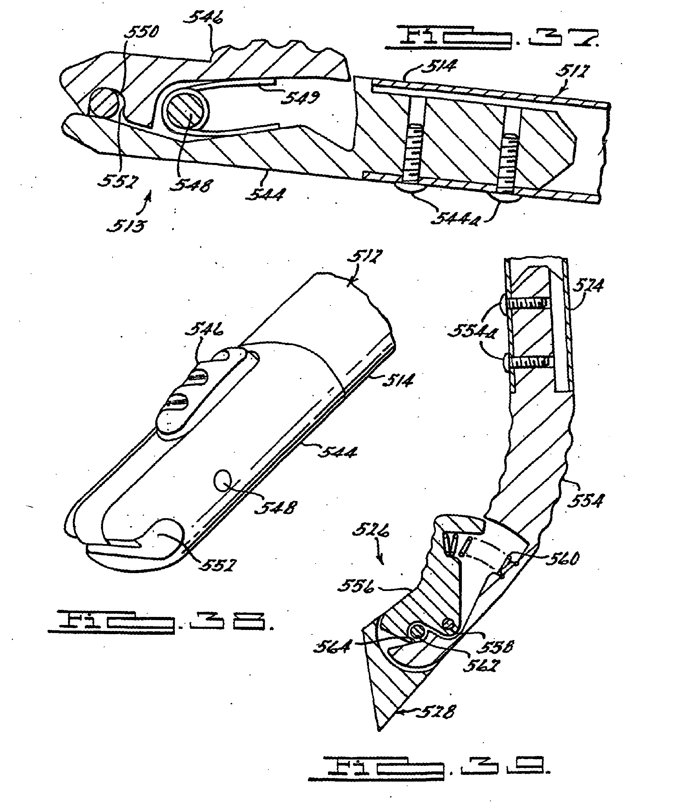

Figure 37 is a side cross sectional view of an alternative embodiment of the upper connection assembly;

Figure 38 is an enlarged perspective view of the alternative embodiment of the upper connection assembly;

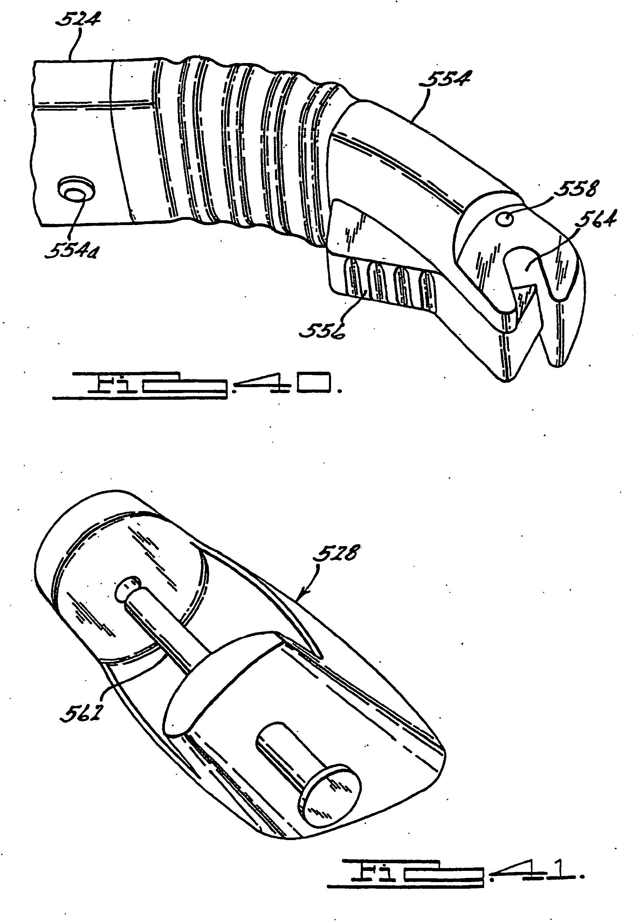

Figure 39 is a side cross sectional view of an alternative embodiment of the lower locking assembly;

Figure 40 is an enlarged perspective view of the alternative embodiment of the lower locking assembly;

Figure 41 is an enlarged perspective view of the anchor assembly;

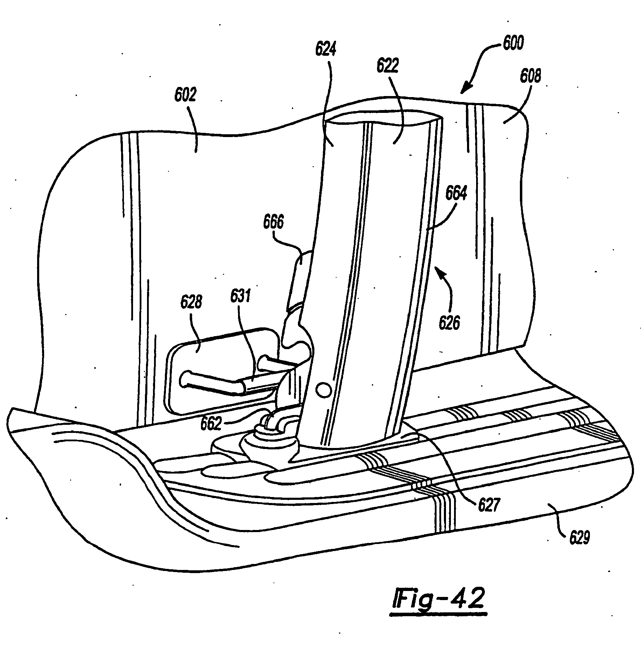

Figure 42 is an enlarged perspective view of a rear portion of a vehicle illustrating a yet another embodiment of a multi-position, articulating, article carrier apparatus secured to the outer body surface of the vehicle with the apparatus in a first or lowered position;

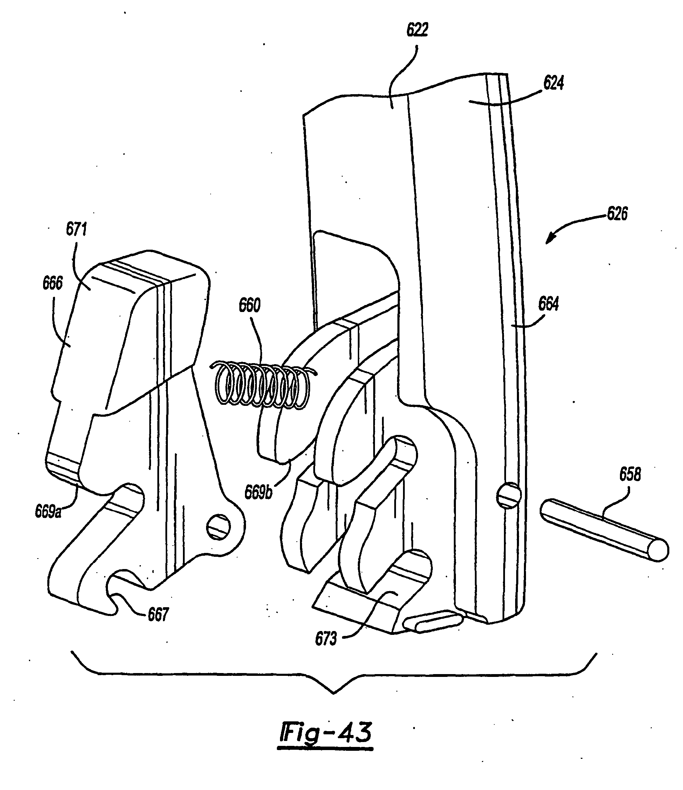

Figure 43 is an enlarged, exploded, perspective view of a lower locking assembly;

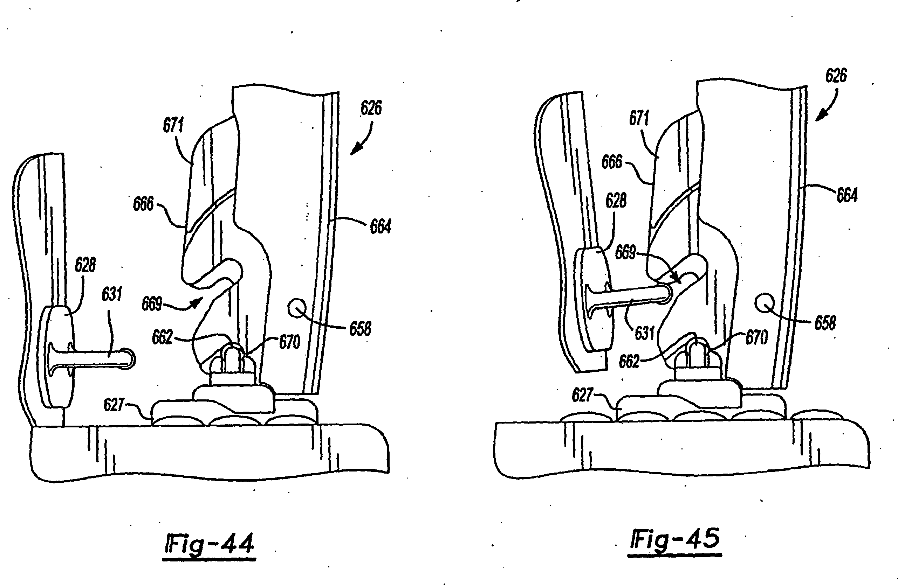

Figure 44 is a side view of the lower locking assembly in a closed or latched position;

Figure 45 is a side view of the lower locking assembly as a liftgate striker first engages a release latch;

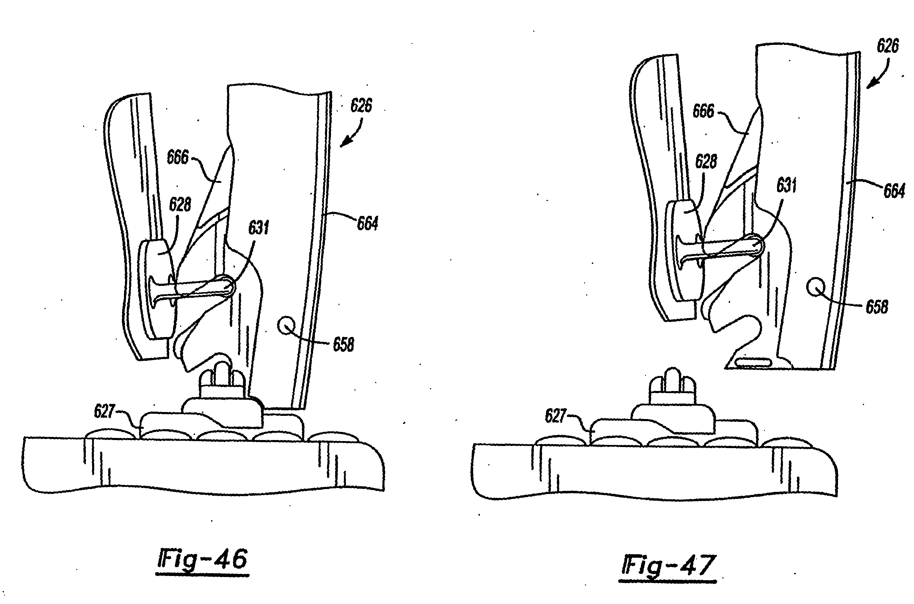

Figure 46 is a side view of the lower locking assembly as the liftgate striker unlatches a hook member from a bumper striker;

Figure 47 is a side view of the lower locking assembly as the liftgate and liftgate striker automatically raises the lower locking assembly from the bumper striker;

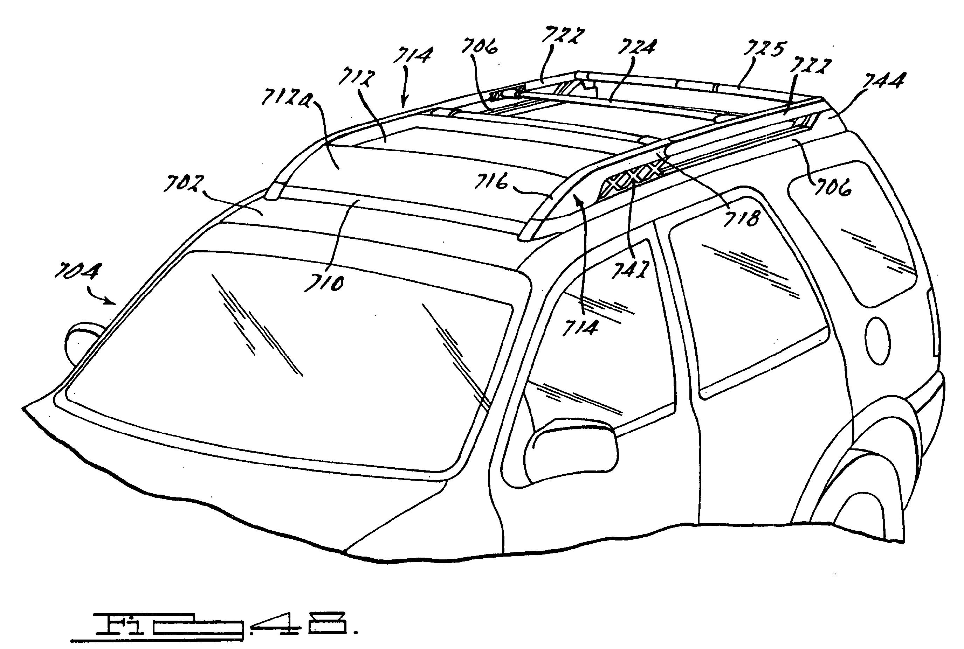

Figure 48 is a perspective view of a vehicle at which a vehicle article carrier in accordance with the present invention is mounted; and

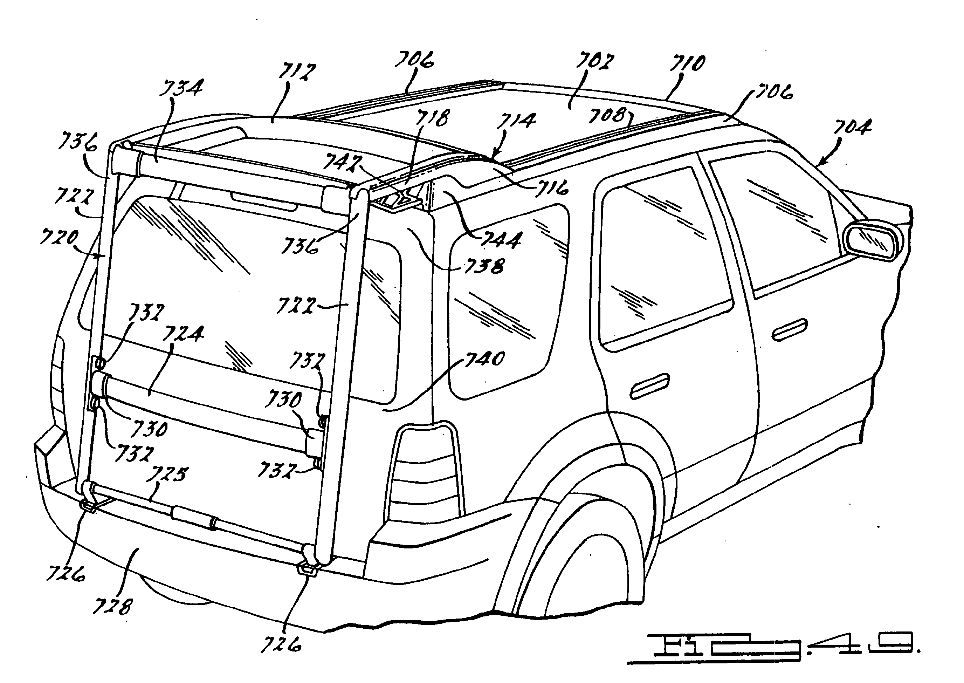

Figure 49 is a rare perspective view from the vehicle Figure 48 showing a cargo supporting structure of the vehicle article carrier disposed over a rear liftgate of the vehicle, and the stowage bin position closely adjacent to the rear liftgate for easier access thereto.

### DETAILED DESCRIPTION OF THE PREFERRED EMBODIMENTS

The following description of the preferred embodiments is merely exemplary in nature and is in no way intended to limit the invention, its application, or uses. Further, the embodiments of Figures 1-47 do not form part of the invention but are simply provided as useful for understanding the invention.

Referring to Figure 1 there is shown a multi-position, articulating, vehicle article carrier apparatus 10. The apparatus 10 is shown secured to a roof portion 12a of a motor vehicle 12. While the motor vehicle 12 is illustrated as a sport utility vehicle (SUV), it will be appreciated that the apparatus 10 could also be used with minivans, station wagons, and a wide variety of other vehicles, and is therefore not limited to use with any particular type of vehicle.

The apparatus 10 includes a pair of side rails 14 which are adapted to be fixedly secured to the roof portion 12a of the vehicle 12. Each side rail 14 includes a rear support 16 and a front support 17 which support a main portion 14a of the side rail 14 above the roof portion 12a. Each of the main portions 14a of each side rail 14 comprise C-shaped channels.

A pair of articulating mechanisms 18 are engaged with the side rails 14 so as to be movable along each of the side rails 14. The articulating mechanisms 18 are pivotally secured to a cargo supporting structure 20. The cargo supporting structure 20 includes a frame comprised of side members 22, a transversely extending top frame member 24 and an actuator bar assembly 26. At least one cross bar 25, and more preferably a pair of cross bars 25, are disposed on the cargo supporting structure 20 to extend between the side members 22. The cross bars 25 may be fixedly secured to the side members 22 or clamping assemblies or other means may be employed to permit adjustable positioning of the cross bars 25 along the side members 22. Securing straps such as bungee cords may be used to secure cargo on the cross bars 25.

A lower or free end 28 of the cargo supporting structure 20 includes a pair of lower locking assemblies 30. These lower locking assemblies 30 are each adapted to latch with a corresponding pair of latching assemblies 32 disposed within a rear bumper 34 of the vehicle 12.

Referring to Figures 1-3, the apparatus 10 can be secured in a first or lowered position disposed over a liftgate 12b, as shown in Figure 1. In this position cargo can be carried on the cargo supporting structure 20 through the use of suitable fastening straps or bungee cords or like components which secure the cargo to the cross bars 25. In Figure 2, the cargo supporting structure 20 is shown after same has been raised into an intermediate position. This is accomplished by a user actuating the actuator bar assembly 26 to release the lower locking assemblies 30 from the latching assemblies 32, and then lifting upwardly on the free end 28 of the cargo supporting structure 20. Figure 3 shows the cargo supporting structure 20 after same has been slid forwardly over the roof portion 12a of the vehicle 12. In this position the lower locking assemblies 30 can be locked to a corresponding pair of upper locking assemblies 36 associated with the two rear supports 16.

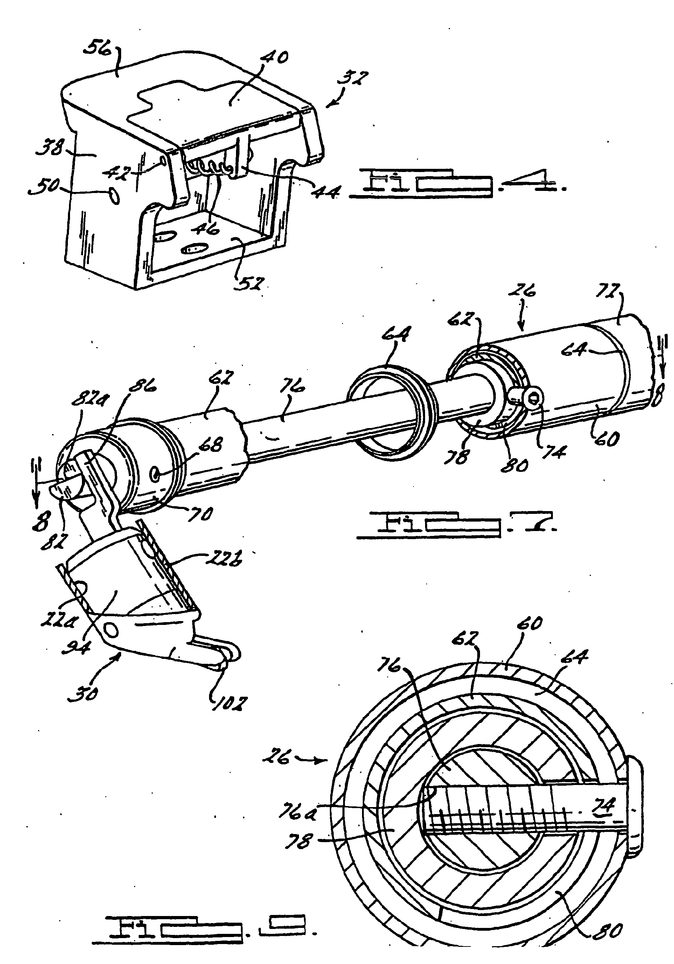

Referring now to Figures 4 and 5, one of the latching assemblies 32 is shown. The latching assembly 32 includes a main body portion 38 and a latching door 40 pivotally secured by a pivot pin 42 to the main body portion 38. The latching door 40 includes a lower end 44 which is biased by a spring 46 secured to a transversely extending pin 50. Thus, the latching door 40 is constantly biased into the closed position shown in Figure 4. A base portion 52 allows the main body portion 38 to be secured to a structural frame member 54 disposed within the bumper 34. The base portion 52 is preferably secured to the structural member 54 by a plurality of threaded fastening members 58 extending through apertures 52a in the base portion 52. An upper wall 56 of the main body portion 38 sits generally flush with an upper outer surface of the bumper 34 to present an aesthetically pleasing appearance whether or not the cargo supporting structure 20 is in the lowered position shown in Figure 1.

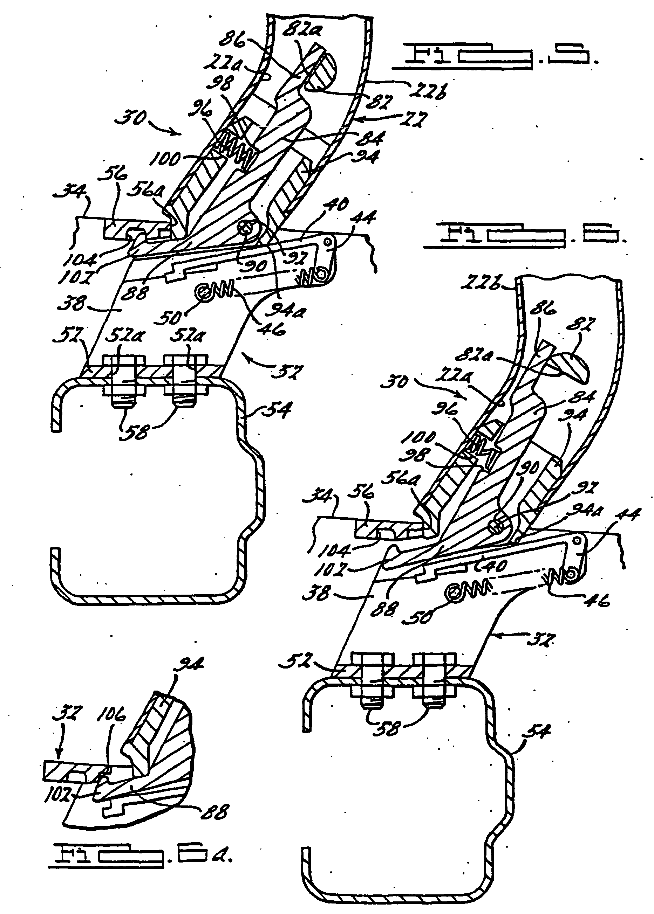

Referring now to Figures 7-9, the actuator bar assembly 26 will be described. Referring specifically to Figures 7 and 8, the actuator bar assembly 26 includes a centrally disposed, manually graspable and rotatable member 60. Rotatable member 60 is disposed over a first sleeve portion 62 and supported by a pair of support rings 64 which are also disposed over the first sleeve 62. The first sleeve 62 extends completely to each opposite end 66 of the actuator bar assembly 26 and is secured by at least one fastening member 68 within an end cap portion 70. A free wheeling sleeve 72 is disposed on each side of the rotatable sleeve 60 in between one of the supports 64 and one of the end cap portions 70. The free wheeling sleeve 72 rotates freely while being grasped when the free end 28 of the cargo supporting structure 20 is lifted from the lowered position of Figure 1 into the intermediate position of Figure 2.

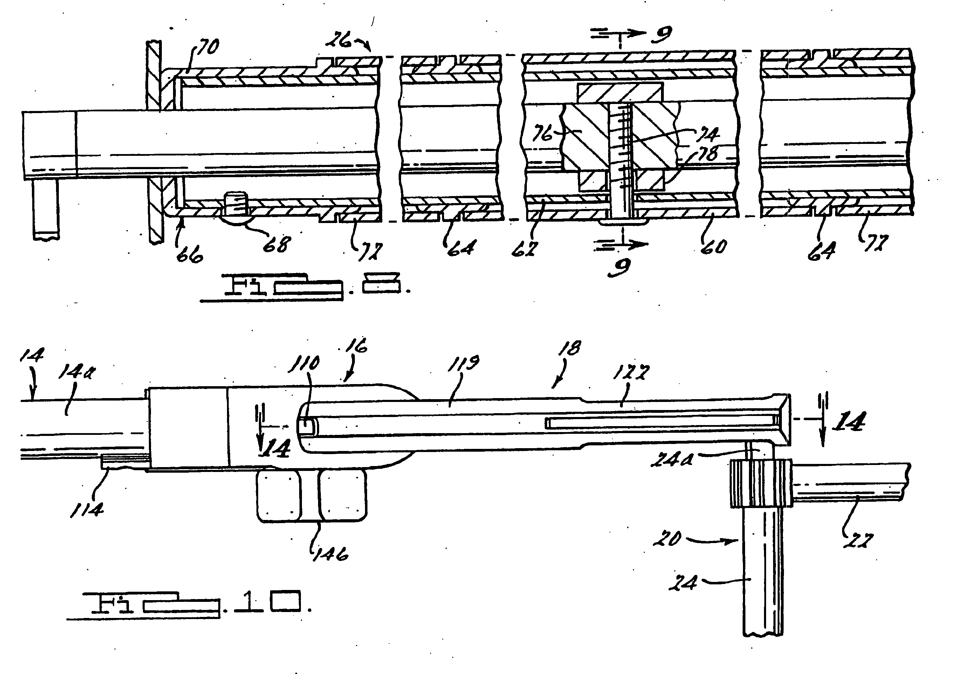

With further reference to Figures 8 and 9, the rotatable sleeve 60 is secured to a torque rod 76 via a threaded member 74 which extends into a threaded bore 76a in the torque rod 76. A spacer sleeve 78 (also shown in Figure 7) also receives the threaded member 74 therethrough. The first sleeve 62 includes a slot 80 extending over an arc of slightly greater than 90?. Slot 80 permits the rotatable sleeve 60 and the threaded member 74 to be rotated without interference from the first sleeve 62. Thus, when the rotatable sleeve 60 is rotated, this rotational movement is transmitted to the torque rod 76.

With specific reference to Figure 7, each opposite end of the torque rod 76 includes a half moon shaped protrusion 82 which forms a camming surface 82a. Camming surface 82a is used to control locking and unlocking of its associated lower locking assembly 30, which will be described momentarily. It will thus be appreciated that the actuator bar assembly 26 allows an unlocking action to be effected which releases the two lower locking assemblies 30 simultaneously from their respective latching assemblies 32 simply through a short twisting motion of the rotatable sleeve 60. Thus, unlocking of the actuator rod assembly 26 from the lower locking assemblies 32 can be effected with only one hand of a user and with a simple, short and convenient rotational movement of the rotatable sleeve 60.

Referring now to Figures 5-7, the construction and operation of one of the pair of lower locking assemblies 30 will be described. Each lower locking assembly 30 includes a latching lever 84 having an upper end 86 and a lower end 88. The latching lever 84 is pivotally mounted via a pivot pin 90 which extends through an aperture 92 in the lever 84 and also through a main body portion 94 which partially encloses the latching lever 84.

With specific reference to Figure 5, a spring 96 is disposed against an inside surface 22a of a tubular portion 22b of the side member 22, and extends through an opening 100 in the main body portion 94 into a notch 98 formed in the latching lever 84. The spring 96 biases the lower end 88 of the latching lever 84 upwardly into a closed or latched position, which is shown in Figure 5.

With reference to Figures 5, 6 and 7, when the rotatable sleeve 60 is grasped with one hand and rotated, the camming surface 82a of the protrusion 82 rotates to urge the upper end 86 of the latching lever 84 pivotally about the pivot pin 90. As the latching lever 84 rotates, the lower end 88 thereof is drawn away from the upper wall 56 of the latching assembly 32 (Figure 6). This allows a lip portion 102 of the latching lever 84 to be drawn out of a notch 104 formed in an undersurface of the upper wall 56. While the rotatable sleeve 60 is held in the rotated position, the user lifts the free end 28 of the cargo supporting structure 20 upwardly and away from the latching assembly 32.

When the free end 28 of the cargo supporting structure 20 is lowered into latching engagement with the latching assemblies 32, no rotational movement of the rotatable sleeve 60 is required for proper latching of the lower locking assemblies 30 to occur. As the lower end 88 of each latching lever 88 contacts its respective latching door 40, an edge portion 94a of the main body portion 94 engages the latching door 40 and urges this component downwardly into the position shown in Figures 5 and 6. Referring to Figure 6a, further lowering movement of the cargo supporting structure 22 causes the lip portion 102 to engage an interior edge 106 of the upper wall 56. Further lowering movement causes the lip 102 to ride over the interior edge 106 before snapping into engagement in the notch 104 (Figure 5).

Referring now to Figures 10-15, the construction and operation of the articulating mechanisms 18 will be described. With initial reference to Figures 10, 11 and 11a, each articulating mechanism 18 includes a pair of rollers 110 which are pivotally secured via axles 112 within cut-outs 119a of a support bar 119. The support bar 119 is sized so as to be able to fit within a C-shaped channel 14b of the side rail 14 and through a C-shaped channel 116a (Figure 11) in the rear support 16. During assembly, the articulating mechanism 18 is inserted through the C-shaped channel 116a in the rear support 16 and a stop member 114 is secured to the support bar 119 via a threaded member 116. The stop member 114 prevents the articulating mechanism 18 from being withdrawn beyond a predetermined point from its respective side rail 14.

With further reference to Figures 11 and 14, the support bar 119 includes a slot 120 formed therein within which is disposed a locking bar 122. The locking bar 122 is pivotally mounted at a central aperture 123 by a pivot pin 126 extending through the support bar 18. An elongated, linear slot 124 is also formed in the support bar 18. This slot 124 further includes a relief portion 124a to allow clearance for a cam lobe 128. The slot 124 may vary in length, but in one preferred form is between about six-nine inches.

With reference to Figures 14 and 15, a threaded member 132 extends through an opening 134 in a first end 136 of the locking bar 122. The threaded member 132 captures a biasing member 138 within the opening 134. Biasing member 138 serves to provide a constant biasing force which tends to bias the first end 136 of the locking bar 122 upwardly into the position shown in Figure 15.

With reference to Figures 10 and 14, the top frame member 24' includes an axle portion 24a at each end thereof. The axle portions 24a each have attached thereto at their outermost ends one of the cam lobes 128. Thus, the axle portions 24a pivotally support the cargo supporting structure 20 from the articulating mechanisms 18. Importantly, the axle portions 24a also are able to slide within the elongated slots 124 when the cargo supporting structure 20 is moved from the intermediate position of Figure 2 to the position shown in Figure 3.

Referring now to Figures 12, 13, 14 and 15, when the cargo supporting structure 20 is in the lowered position shown in Figure 1, the side members 22 are disposed in the position shown in Figure 12. In this position the cam lobe 128 is engaged in the relief portion 124a, as illustrated in Figure 14. This allows the cam lobe 128 to lift a second end 140 of the lock bar 122 which causes the first end 136 to project outwardly of the support bar 119. The first end 136 abuts a notch 142 formed in the rear support 16 which prevents the articulating mechanism 18 from moving inadvertently towards and into the support member 16 when the cargo supporting structure 20 is in the lowered position of Figure 1. Thus, when in the lowered position shown in Figure 1, the cargo supporting structure 20 is fixedly disposed. Its upper end 20a cannot be pulled outwardly away from the upper supports 16 because of abutting engagement of the stop members 114 with their respective supports 16. Abutting engagement of the first end 136 of each locking bar 122 with the notch 142 of each support 16 prevents the upper end 20a from being pushed in toward the side rails 14. Accordingly, cargo supported on the cross bars 25 of the cargo supporting structure 20 can be supported just as securely with the structure 20 in the lowered position as when the structure 20 is disposed over the roof portion 12a of the vehicle 12.

When the cargo supporting structure 20 is lifted into the intermediate position shown in Figure 2, the cam lobe 128 rotates in accordance with rotational movement of the top frame member 24 (Figure 1) into the position shown in Figure 13. This rotation of the cam lobe 128 allows the spring 138 to bias the first end 136 of the locking bar 122 upwardly into the position shown in Figure 15. In this position the locking bar 122 is now able to clear the notch 142. Accordingly, the entire articulating mechanism 18 may be urged forwardly (i.e., to the right in the drawings of Figures 12-15) through the C-shaped channels 16a in each of the rear supports 16. This unlocking action is further accomplished automatically by simply raising the free end 28 of the cargo supporting structure 20 into the intermediate position shown in Figure 2.

Once the individual has raised the cargo supporting structure 20 into the position shown in Figure 2, the entire cargo supporting structure can be pushed forwardly until the structure 20 is positioned over the roof portion 12a of the vehicle 12. During the initial six-nine inches of forward travel, the axle portions 24a slide forwardly within the elongated slots 124 before contacting forward ends 124b of the slots 124. This six-nine inches of "travel" provides the distance necessary to place the pivot axis defined by the axle portions 24a sufficient behind the vehicle 12 so that the vehicle 12 does not interfere with lowering pivotal movement of the cargo supporting structure 20.

Another important advantage of the articulating mechanisms 18 is that they effectively allow the top frame member 24 to be positioned rearward of the pivot axis of the liftgate 12b of the vehicle 12 such that the cargo supporting structure 20 can be lifted with the liftgate 12b without first having to place the structure 20 over the roof portion 12a of the vehicle 12. Thus, access can easily be gained to the rear of the vehicle 12 once the cargo supporting structure 20 and liftgate 12b are both in the raised position.

Referring now to Figures 11 and 17, the securing of one of the lower locking assemblies 30 to one of the upper locking assemblies 36 (also shown in Figure 3) will be described. Each of the upper locking assemblies 36 comprises a housing 146 which is preferably integrally formed with an associated one of the rear supports 16. Within the housing 146 is upstanding structure 148 and a transversely extending latch member 150. When the cargo supporting structure 20 is to be secured over the roof portion 12a of the vehicle 12, it is urged into position over the roof portion 12a such that the lower locking assembly 30 is over, but slightly forwardly, of the upstanding structure 148. The locking assembly 30 can then be lowered into an interior area of the housing 146. As the lower locking assembly 30 is lowered into the interior area of the housing 146, the lip portion 102 of the latch lever 84 contacts an upper edge 150a of the transversely extending latch member 150 and pivots slightly against the biasing force of the spring 96 so as to clear the edge 150a. The lip portion 102 then latches under the latch structure 150. In the position shown in Figure 17, the lower locking assembly 30 is secured against movement.

Unlocking of the lower locking assembly 30 is accomplished by a user grasping and rotating the rotatable sleeve 60, which causes the latching lever 84 to pivot counterclockwise in the drawing of Figure 17. While holding the rotatable sleeve 60 in its rotated position against the biasing force of spring 96, the user may then push the entire cargo supporting structure 20 forwardly just slightly before lifting the free end 28 of the structure 20 and then pulling same away from the vehicle 12 into the position shown in Figure 2. Accordingly, unlatching of the cargo support structure 20 from the position shown in Figure 3 can be accomplished by the user merely grasping the rotatable sleeve 60 and, from a single position behind the vehicle 12, articulating the actuator bar assembly 26 to clear the upper locking assembly 36. Thus, there is no need for the user to separately unlock each of the lower locking assemblies 30. This significantly adds to the convenience and ease in using the apparatus 10.

From the foregoing description, it will be appreciated that the apparatus 10 provides an articulatable article carrier assembly which enables cargo to be carried either in a generally horizontal position over the liftgate of a vehicle, or on top of the vehicle, depending upon the user's preference. The apparatus 10 significantly eases the manner with which cargo may be loaded, since the cargo need not be positioned directly on top of the vehicle 12 but rather on the cross bars 25 while the cargo supporting structure 20 is disposed over the liftgate 12b. In this regard, it will be appreciated that one or both of the cross bars 25 could include perpendicularly extending portions which serve to temporarily support cargo which is positioned on the cross bars 25 when the cargo supporting structure 20 is in the lowered position shown in Figure 1. The apparatus 10 can further be locked and unlocked from the position shown in Figures 1-3 with a simple, single movement of the rotatable sleeve 26, which thus serves to significantly enhance the ease with which the cargo supporting structure 20 can be moved between its various positions.

Referring now to Figures 18 and 19, an alternative embodiment 200 of the multi-position, articulating, vehicle article carrier apparatus is illustrated. The apparatus 200 includes a cargo supporting structure 202 comprising a pair of cross bars 204 and a pair of side members 206 (only one being visible). With the apparatus 200, however, a pair of rear supports 208 and a pair of front supports 210 are used to support the cargo supporting structure 202 above the outer body surface 12a of the vehicle 12. Each rear support 208 includes a suitable latching structure which can be actuated through opening and closing of a pivoting lever 209 to engage a suitably shaped cavity 212 (Figure 19) in an outer body surface portion 214 of the vehicle 12. The front supports 210 each include a latching structure therein which can be locked and unlocked via a liftable locking lever 216 (shown in phantom in the lifted position in Figure 19).

When the apparatus 200 is in the position shown in Figure 18, the cargo supporting structure 202 is disposed over the roof portion 12a of the vehicle 12. The internal locking structure within the front supports 210 secures the front supports to conventional slats 218 which are fixedly secured to the roof portion 12a of the vehicle 12, and which each include channels which captively hold portions of the front supports 210 to the slats 218. This construction for the slats and the interengagement of the front supports 210 with the slats 218 to permit sliding movement of the front supports 210 along the slats 218 is well known in the art. Patents of the assignee of the present application which disclose suitable constructions for the locking assembly of the front support 210, which could be utilized with little or no modifications, are U.S. Patent Nos. 4,899,917; 4,972,983; 4,982,886; 5,385,285 and 5,579,970. In Figure 19, the cargo supporting structure 202 is shown disposed over the liftgate 12b of the vehicle 12. The rear supports 208 can be locked at one of a plurality of positions defined by cavities 212.

Referring now to Figures 20 and 21, a multi-position, articulating, vehicle article carrier 300 in accordance with yet another alternative embodiment is shown. The apparatus 300 is similar to the apparatus 200 and includes a cargo supporting structure 302 comprised of a pair of cross bars 304 and a pair of side members 306 (only one being visible). The cargo supporting structure 302 is supported above the roof portion 12a of the vehicle 12 by a pair of rear supports 308 and a pair of front supports 310 (with only one of each support 308 and 310 being visible). The front supports 310 are disposed on conventional slats 312 such that the front supports 310 can be moved slideably along the slats. The slats 312 are fixedly secured to the roof portion 12a of the vehicle 12. Each slat 312 further includes a latching assembly 314 to which one of the rear supports 308 may be releaseably secured.

To move the cargo supporting structure 302 from the position shown in Figure 20 into the position shown in Figure 21, the user first unlatches the front supports 310 by pulling outwardly on lever portions 316 of each of the front supports 310. This unlocks each front support 310 from its associated slat 312 and allows the front support 310 to be slid along its associated slat 312. Each rear support 308 is also unlatched from its associated latching assembly 314 by lifting a latching lever 318. The cross bar 304 extending between the rear supports 308 can then be lifted off of the latching assemblies 314, and the entire cargo supporting structure 302 pulled rearward so as to extend over the liftgate 12b. The rear supports 308 are then latched to suitable latching structures formed in the liftgate 12b at areas 322. The front supports 310 are then latched by closing the levers 316, which causes them to be locked on the slats 312 at the position shown in Figure 21. If desired, notches 324 (one of which is shown in Figure 20) could be formed in the slats 312 to define a specific position at which the front supports 312 must be placed in before same can be locked to the slats 312.

The apparatus 300 also provides a coupling member 326 associated with each front support 310 which provides two pivot points 328 and 330. These two points of rotation are needed because the point of rotation about which the liftgate 12b rotates is laterally offset of the point of rotation of the cargo supporting structure 302. This allows the cargo supporting structure 302 to be easily articulated, together with the liftgate 12b, as the liftgate 12b is lifted, and without the need to first unlock the front supports 310 or the rear supports 308. Thus the apparatus 10 can be lifted simultaneously from the position shown in Figure 21 into an intermediate position, wherein the cargo supporting structure 302 extends generally horizontally outwardly from the roof portion 12a, such as in Figure 2, before being pushed onto a position over the roof portion 12a, without any binding action occurring at the coupling member 326.

Referring to Figure 22, an articulating vehicle article carrier 400 is shown in accordance with another alternative embodiment. The article carrier 400 differs from the previous embodiments in that it is not able to be positioned on top of the roof of vehicle 402, but is quickly and easily removable from the vehicle 402 when it is not needed. Furthermore, the construction of the article carrier 400 is such that it is able to be placed in a compact arrangement, once removed, so that it can be stored conveniently within an area such as a garage, or even within a cargo area of the vehicle itself.

With further reference to Figure 22, a pair of supports 404 are fixedly secured to a roof portion 406 of a vehicle 402. A cargo supporting structure 410 having a pair of upper coupling links 412 are pivotally attached to the supports at first ends 414 thereof. Second ends 416 are attached to a first or upper pair of pivot assemblies 418. The pivot assemblies 418 are also attached to first ends 420 of a pair of main support members 422. These support members 422 are illustrated as tubular, slightly curving members, but it will be appreciated that they could just as easily comprise different cross-sectional shapes. The main support members 422 are preferably comprised of aluminum to provide very light weight yet structurally strong members.

The main support members 422 are attached at second ends 424 thereof to a second pair of pivot assemblies 426. The second pair of pivot assemblies 426 are each in turn releaseably engageable with a pair of anchor assemblies 428. Each of the anchor assemblies 428 are fixedly secured to a liftgate 408 of the vehicle 408. The cargo supporting structure 410 thus is positioned over the liftgate 408 when in use. Since the cargo supporting structure 410 is very lightweight, the presence of the structure 410 adds very little additional weight to the liftgate 408 when the liftgate is being lifted by a user. Thus, to the user, the effort required to lift the liftgate is almost the same whether or not the cargo supporting structure 410 is attached to the vehicle 408. Figure 23 shows the article carrier 400 with the liftgate 408 in its raised position.

The cargo supporting structure 410 also preferably includes at least one, and more preferably a pair, of cross bars 430 supported on the main support members 422. Each of the cross bars 430 includes a mounting arm 432 at each of its opposite ends which are secured to a respective one of the main support members 422 at a predetermined position by a manually engageable fastening member 434. This coupling is shown in greater detail in Figure 23A. The manually engageable fastening member 434 has an enlarged, manually graspable portion 434a and a partially threaded portion 434b. The partially threaded portion 434b threadably engages with a tapped hole 434c within each mounting arm 432. A rivnut 435 is also preferably included for allowing the cross bar 430 to be attached parallel to the support member 422 when the article carrier 400 is detached from the vehicle 408. This feature will be described in greater detail momentarily.

An additional feature of the cargo supporting structure 410 is that the cross bars 430 can be secured to the main support members 422 as illustrated in Figure 24 when the structure 410 is removed from the vehicle 408 for storage. This is accomplished by the rivnut fastener 435 shown in Figure 23A being included at a predetermined point along the length of each cross bar 430 to allow the separated cross bar 430 to be reattached via the fastening member 434 while positioned parallel to it. This also requires forming a hole at the proper point along the length of each support member 422 by which the fastening member 434 can be extended through. Each main support member 422 can then be handled separately in a compact configuration with one of the cross bars 430 attached to it. It will be appreciated that a variety of attachment or clamping mechanisms could readily be used to releaseably secure the cross bars 430 generally parallel to the main support members 422. It will also be appreciated that the mounting arm 432 could be formed with one or more loop portions to facilitate the attachment of bungee cords or other fastening straps or cords. Figure 24 also illustrates an alternative preferred form of mounting arm 432' having such a loop portion 433'.

Referring to Figure 25, the construction of one of the upper pivot assemblies 418 can be seen. It will be appreciated, however, that the construction of each of the lower pivot assemblies 426 is identical to that shown in Figure 25. A first pivot element 439 includes a tubular free flange portion 439a having an enlarged connecting ring 438. A second pivot element 441 also includes a tubular free flange portion 441 a and an enlarged connecting ring 440 having a slot 442 formed therein. The free flange portion 439a is intended to be coupled to the second end 416 of the upper coupling link 412 with threaded fasteners or other conventional fastening means, while the free flange portion 441 a of the second pivot element 441 is intended to be secured to an end of one of the main support members 422.

The slot 442 is just slightly wider than the width of the connecting ring 438 such that it is able to receive the connecting ring 438 therein. First and second identical coupling elements 444 each include an enlarged shoulder portion 446 and a hub portion 448. The hub portion 448 has an outer diameter which permits it to snugly slide within the connecting rings 440 and 438 when the two rings 440 and 438 are coupled together. The hub portion 448 includes a pair of slots 450 each having a somewhat flexible arm 452. The slots 450 open in opposite directions.

The two coupling elements 444 are secured to each other by first pressing each into the assembled connecting rings 438 and 440 from opposite sides. The coupling elements 444 are then rotated slightly such that the arms 452 of each coupling element are aligned with the slot 450 of the other coupling element. Then the coupling elements 444 can be rotated in different directions, which causes each arm 452 to snap into engagement with the slot 450 of the opposite coupling element 444. At this point the first and second pivot elements 439 and 441 will be securely held together while permitting pivotal movement of the upper coupling link 412 relative to its associated main support member 422. The opening formed in each pivot assembly also functions as a tie-down area where bungee cords or the like can be attached.

An alternative pivot assembly 460 is shown in Figure 26. Pivot assembly 460 is similar to assembly 440 with the exception of a single piece locking hub 462. The locking hub includes a pair of shoulder portions 464 and 464a spaced apart by a central hub portion 466. One or more slots 468 are formed to extend into the central hub portion 466 from the shoulder portion 464a. When the locking hub 462 is inserted into the assembled combination of connecting rings 438 and 440, with the shoulder portion 464a being inserted first, that shoulder portion will compress slightly as it is forced through the connecting rings 438 and 440. As it clears the second connecting ring 440a it snaps out to lock the locking hub 462 within the connecting ring 440. Each of the first pivot assemblies 418 and second pivot assemblies 426, as well as the alternative pivot assembly 460 shown in Figure 26, are all preferably made from high strength plastic but could also be formed from other suitably strong and lightweight materials.

With reference to Figure 27, one of the supports 404 can be seen to include a recess 470 in which the first end 414 of one of the upper coupling links 412 is positioned. A conventional, manually engageable locking wheel 472 having a threaded shaft 474 extends through openings 476 in the first end 414 and into a threaded recess 478. When the locking wheel 472 is completely removed from the support 404 the upper coupling link 412 can be completely removed from the support.

Referring now to Figure 28, one of the anchor assemblies 428 is shown. The anchor assembly 428 includes a flange portion 480 having a pair of openings 482. The openings 482 accommodate conventional fastening elements 483 that are used to secure the flange portion 480 to a suitable reinforcing member 484 within the liftgate 408.

The anchor assembly 428 also includes a tubular neck portion 486 integrally formed with or otherwise secured to the flange portion 480, and having a tapering end 486a. The neck portion 486 has an opening 488 for receiving therethrough a locking element 490. The locking element 490 is inserted from the rear (i.e., initially through the flange portion 480) into the interior area of the tubular neck portion 486. The locking element 490 includes a biasing element 492 which is a Z-shaped piece of spring steel having a head portion 494 sized to protrude through the opening 488. The head portion 494 preferably has a beveled edge.

With reference to Figure 29, to connect the lower pivot assembly 428 to its associated anchor assembly 428 the free flange portion 438a is pushed over the tubular neck portion 486. The free flange portion 438a includes an opening 496 aligned with the opening 488 in the neck portion when the free flange portion is urged over the neck portion 486. When this occurs, the head portion 494 of the locking element 490 is momentarily depressed as the free flange portion 438a initially slides over the neck portion 486. As soon as the opening 496 reaches the opening 488, the head portion 494 snaps into the opening 488. To release the free flange portion 438a, the user pushes down on the head portion 494 and pulls the free flange portion 438a away from the neck portion 486. The beveled edge of the head portion 494 assists in causing the head portion 494 to be retracted.

Referring to Figure 30, an articulating vehicle article carrier 500 is shown in accordance with another alternative embodiment. The article carrier 500 differs from the previous embodiments in that it is not able to be positioned on top of the roof of vehicle 502, but is quickly and easily removable from the vehicle 502 when it is not needed. Furthermore, the construction of the article carrier 500 is such that it is able to be placed in a compact arrangement, once removed, so that it can be stored conveniently within an area such as a garage, or even within a cargo area of the vehicle itself.

With further reference to Figures 30 and 31, a pair of supports 504 are fixedly secured to a roof portion 506 of the vehicle 502. A cargo supporting structure 510 includes a pair of upper coupling links 512. The pair of upper coupling links 512 are pivotally attached to the supports 504 at first ends 514 via an upper connection assembly 513, which will be described below. Second ends 516 are attached to a first or upper pair of pivot assemblies 518. The pivot assemblies 518 are also attached to first ends 520 of a pair of main support members 522. These support members 522 are illustrated as generally rectangular, slightly curving members, but it will be appreciated that they could just as easily comprise different cross-sectional shapes. The main support members 522 are preferably comprised of aluminum to provide very light weight yet structurally strong members.

The main support members 522 are attached at second ends 524 thereof to a lower locking assembly 526. The lower locking assemblies 526 are each in turn releaseably engageable with either a pair of anchor assemblies 528 (Figure 31), which are fixedly secured to a liftgate 508 of the vehicle 502, or a pair of latching assemblies 527 disposed in the vehicle bumper 529 (Figure 31). The cargo supporting structure 510 thus is positioned over the liftgate 508 when in use. Since the cargo supporting structure 510 is very lightweight, the presence of the structure 510 adds very little additional weight to the liftgate 508 when the liftgate is being lifted by a user. Thus, to the user, the effort required to lift the liftgate is almost the same whether or not the cargo supporting structure 510 is attached to the vehicle 502 and is raised in a manner generally consistent with previous embodiments described above.

Referring now to Figures 30-35, the cargo supporting structure 510 also preferably includes at least one, and more preferably a pair, of cross bars 530 supported on the main support members 522. Each of the cross bars 530 includes a mounting portion 532 at each of its opposite ends which are secured to a respective one of the main support members 522 at a predetermined position by a manually engageable fastening member 534. This coupling is shown in greater detail in Figure 32. Mounting portion 532 in turn is secured to cross bar 530 via thread fasteners 530a or other conventional fasteners.

As best seen in Figures 32, 34, and 35, the manually engageable fastening member 534 has an enlarged, manually graspable portion 534a and a threaded internal portion 534b. The threaded internal portion 534b threadably engages with a threaded screw member 534c Threaded screw member 534c extends from a generally inverted T-shaped mounting member 534d, which is disposed within a track 522a formed in main support member 522. As best seen in Figures 33 and 34, mounting portion 532 of cross bar 530 generally includes a pair of generally identical protruding mounting flanges 532a. The pair of mounting flanges 532a are each sized to slide within track 522a of main support member 522 to permit vertical adjustment of cross bar 530. To facilitate insertion of cross bar 530 within track 522a of main support member 522, main support member 522 further includes a notched area 522b sized to enable cross bar 530 to be slid into track 522a.

Referring to Figures 31, 32, and 36, the construction of the pivot assemblies 518 can be seen. A first pivot element 539 includes a tubular flange portion 539a. A second pivot element 541 also includes a pair of tubular flange portions 541 a. The tubular flange portion 539a is intended to be pivotally coupled to the pair of tubular flange portions 541 a via a connection rod 543. The first pivot element 539 is fixedly coupled to the second end 516 of the upper coupling link 512 with threaded fasteners 539b or other conventional fastening means, while the second pivot element 541 is intended to be secured to an end of one of the main support members 522 via threaded fasteners 541 b or other conventional fastening means.

Referring to Figures 31, 37, and 38, the construction of upper connection assembly 513 can be seen. Upper connection assembly 513 includes a main member 544 and a pivoting member 546. Pivoting member 546 is pivotally coupled to main member 544 via a connecting pin 548. Pivoting member 546 is biased in a closed position by a torsional spring 549 such that pivoting member 546 and main member 544 cooperate to secure the article carrier 500 to the pair of supports 504 of the vehicle 502. More particularly, pivoting member 546 and main member 544 retain a transverse connection pin 550, which extends from each of the pair of supports 504, within a retaining channel 552 formed by pivoting member 546 and main member 544. The main member 544 is fixedly coupled to the first end 514 of the upper coupling link 512 with threaded fasteners 544a or other conventional fastening means. Upper connection assembly 513 can be released from connection with transverse connection pin 550 of support 504 by applying a compressing force to pivoting member 546 to overcome the biasing force of torsional spring 549.

Similarly, referring now to Figures 31, 39, 40, and 41, the construction of lower locking assembly 526 is seen. Lower locking assembly 526 includes a main member 554 and a pivoting member 556. Pivoting member 556 is pivotally coupled to main member 554 via a connecting pin 558. Pivoting member 556 is biased in a closed position by a compression spring 560 such that pivoting member 556 and main member 554 cooperate to secure the article carrier 500 to the anchor assembly 528. More particularly, as best seen in Figures 38 and 40, pivoting member 556 and main member 554 retain a transverse connection pin 562, which extends from each of the pair of anchor assemblies 528, within a retaining channel 564 formed by pivoting member 556 and main member 554. It should be noted that a second transverse connection pin 562a extends from the latching assemblies 527 disposed in the vehicle bumper 529. Therefore, during operation, lower locking assembly 526 is preferably coupled to the anchor assembly 528 to facilitate raising of the liftgate 508. However, while transporting articles upon the article carrier 500, lower locking assembly 526 is preferably coupled to latching assembly 527 disposed in the vehicle bumper 529. This arrangement provides additional carrying capacity afforded by the structural support of the bumper 529. However, it should be understood that the liftgate 508 may be constructed such that it alone can carry the weight of the additional articles fastened to cargo supporting structure 510, which may eliminate the need for latching assembly 527.

The main member 554 is fixedly coupled to the second end 524 of the main support member 522 with threaded fasteners 554a or other conventional fastening means. Lower locking assembly 526 can be released from connection with transverse connection pin 562 of anchor assembly 528 by applying a compressing force to pivoting member 556 to overcome the biasing force of compression spring 560, thereby opening retaining channel 564 to remove transverse connection pin 562.

Accordingly, it should be appreciated that upper coupling link 512, main support member 522, liftgate 508, and the roof of vehicle 502 together define a four-bar linkage that is capable of pivoting when liftgate 508 is actuated.

Referring to Figures 42-47, an articulating vehicle article carrier 600 is shown in accordance with yet another alternative embodiment. The article carrier 600 differs from the previous embodiments in that it is not able to be positioned on top of the roof of vehicle 602, but is quickly and easily removable from the vehicle 602 when it is not needed. Furthermore, the construction of the article carrier 600 is such that it is able to be placed in a compact arrangement, once removed, so that it can be stored conveniently within an area such as a garage, or even within a cargo area of the vehicle itself. Moreover, the article carrier 600 is also able to be automatically disengaged from the vehicle bumper 629 upon opening of the liftgate 608.

The structure and operation of the present embodiment is similar to that described above, therefore in the interest of brevity such structure and operation will not be repeated herein, except where otherwise noted. The present embodiment differs primarily from the previous embodiment in the design and operation of the lower locking assembly 626.

As shown in Figures 42 and 43, the main support member 622 is attached at a second end 624 thereof to a lower locking assembly 626. Lower locking assembly 626 is in turn releaseably engageable with either a liftgate anchor 628, which is fixedly secured to a liftgate 608 of the vehicle 602, or a bumper anchor 627 mounted to or disposed in vehicle bumper 629. The cargo supporting structure 610 thus is positioned over the liftgate 608 when in use.

Still referring to Figures 42 and 43, the construction of lower locking assembly 626 is seen. Lower locking assembly 626 includes a main member 664 and a pivoting member 666. Pivoting member 666 is pivotally coupled to main member 664 via a connecting pin 658. Pivoting member 666 is biased in a closed position by a compression spring 660 such that pivoting member 666 and main member 664 cooperate to secure the article carrier 600 to the bumper anchor 627. More particularly, as best seen in Figures 43-47, pivoting member 666 includes a hooked end portion 667, a liftgate engaging slot 669 (Figures 44 and 45), and a hand release 671. As will be described below and illustrated in the figures, liftgate engaging slot 669 is in fact a cooperating set of two slots-a first slot 669a formed in pivoting member 666 (Figure 43) and a second slot 669b formed in main member 664 (Figure 43). First slot 669a and second slot 669b are slightly offset relative to each other (see Figures 44 and 45) to effect a pivoting movement of pivoting member 666 about connecting pin 658 (see Figure 44).

Accordingly, hooked end portion 667 (Figure 43) of pivoting member 666 cooperates with a bumper striker slot 673 (Figure 43) formed in main member 664 to retain a bumper striker 662, which extends from bumper anchors 627. Bumper striker 662 is thus retained with a retaining channel 670 (Figures 44 and 45) formed by hooked end portion 667 of pivoting member 666 and bumper striker slot 673 formed in main member 664.

During operation, the present embodiment enables an automatic and reliable means of disengaging/engaging article carrier 600 from vehicle bumper 629. In order to open liftgate 608 of vehicle 602, while article carrier 600 is fixedly coupled to vehicle bumper 629, an operator need only unlatch liftgate 608 and begin raising liftgate 608 in a conventional manner. As seen in Figure 44, during this raising process a liftgate striker 631, which extends from liftgate anchor 628 on liftgate 608, is first spaced apart and disengaged from liftgate engaging slot 669. Upon further actuation, as seen in Figure 45, liftgate striker 631 of liftgate anchor 628 engages liftgate engaging slot 669. The force of liftgate striker 631 entering liftgate engaging slot 669 drives pivoting member 666 clockwise (in the figure) about connecting pin 658. This movement retracts hooked end portion 667 of pivoting member 666 from bumper striker slot 673 (Figure 46) permitting unobstructed withdrawal of bumper striker 662 of bumper anchor 627. Upon continued lifting of liftgate 608, lower locking assembly 626 and thus article carrier 600 now becomes automatically coupled to liftgate 608 rather than bumper anchor 627 on vehicle bumper 629. During a latching operating, the opposite occurs-retracting of liftgate 608 causes bumper striker slot 673 to engage bumper striker 662 until liftgate striker 631 retracts from slot 669, whereby hooked end portion 667 extends and retains bumper striker 662.

Article carrier 600 may also be manually disengaged from bumper striker 662 simply by compressing hand release 671 and driving pivoting member 666 clockwise (in the figure) about connecting pin 658. This movement retracts hooked end portion 667 of pivoting member 666 from bumper striker slot 673 (Figure 46) permitting unobstructed manual withdrawal of bumper striker 662 of bumper anchor 627.

Accordingly, it should be appreciated that upper coupling link 612, main support member 622, liftgate 608, and the roof of vehicle 602 together define a four-bar linkage that is capable of pivoting when liftgate 608 is actuated.

Referring now to Figures 48 and 49, a vehicle article carrier 700 in accordance with an embodiment of the present invention is shown. The article carrier 700 is mounted on a roof 702 of the motor vehicle 704. The article carrier 700 includes a pair of side rails 706 fixedly secure to the roof 702. Each of the side rails 706 includes an upwardly facing channel 708 formed therein. A front, aerodynamically shaped decorative member 710 is secured between forward edges of the side rails 706.

Disposed on the side rails 706 is a stowage bin 712. The stowage bin 712 includes a front wall 712a which is aerodynamically shaped and relative to the roof 702 of the vehicle and a windscreen 713 (Figure 48) of the vehicle 704. Stowage bin 712 is mounted between side supports 714. Each side support 714 includes a front portion 716 that is secured to an associated channel 708 of one associated side rail 706. Thus, each of the side supports 714 are able to move slideably along the side rail 716 between the positions shown in Figures 48 and 49.

Each of the side supports 714 further includes a rear end neck portion 718. Secured to the neck portion 718 is a cargo supporting structure 720. The cargo supporting structure 720 includes a pair of support tracks 722 and a cross bar 724 disposed between the support tracks. The cross bar 724 is adjustably positionable along the support tracks 722 to better suit supporting articles of various sizes and shapes. Also disposed between the support tracks 722 is a lower lift bar 725 which is releaseably secured to a pair of securing assemblies 726 disposed in a rear bumper 728 of the vehicle 704. The securing assemblies 726 may be formed in accordance with the construction of latching assemblies 32 described herein or in any suitable manner that allows the user to quickly manually release the lift bar 725 from attachment to the rear bumper 728. The cross bar 724 is otherwise conventional in structure and includes end supports 730 having manually releasable locking knobs 732 as is well known in the art. Locking knobs 732 are threadably secured to conventional tap plates residing within channels formed in each of the support tracks 722 that allow each of the end supports 730 to be moved slideably along the support tracks in conventional fashion.

With further reference to Figure 49, the cargo supporting structure 720 further includes a forward crossbar 734 that is fixedly secured between upper ends 736 of the support tracks 722. The upper end 736 of each support track 722 is further pivotally coupled to the neck 718 of an associated one of the side supports 714. Thus, the entire cargo support structure 720 is able to be articulated from the lowered position show Figure 49 to a raised position extending substantially parallel to the neck portion 718 of the side supports 714. Once in this parallel, extending position, the entire cargo supporting structure 720 and the side supports 714 can be pushed forwardly such that the cargo support structure 720 is disposed entirely over the roof 702 of the vehicle 704. When the vehicle article carrier 700 is in the position shown in Figure 49, it will be appreciated that the stowage bin 712 is positioned closely adjacent an upper rear edge 738 of a rear liftgate 740 of the vehicle 704. Accordingly, the stowage bin 712 is very easily accessible by individuals when standing behind the vehicle 704. In the event the liftgate 740 needs to be opened, the lift bar 725 can be unlatched from the securing assemblies 726 and the entire cargo supporting structure 720 moved into the position shown in Figure 48. Conventional nylon straps, bungee cords or any other form of securing means can be used to secure articles or cargo within the stowage bin 712. For this purpose each side support 714 includes a solid, integrally formed lattice type structure 742 to which ends of the straps, bungee cords, etc. can be secured.

With further reference to Figure 49, when the cargo supporting structure 720 is positioned above the vehicle roof 702 as shown in Figure 48, the securing assembly 726 can be secured to rear support components 744 formed at a rear end of each side rail 706. The rear supports 744 could be formed in accordance with locking assembly 36 shown in Figure 17, or any other suitable latching structure could be employed to secure the lift bar 725 to the side rail 706.

From the foregoing, it will be appreciated that the vehicle article carrier 700 forms a means by which a stowage bin disposed on top of a motor vehicle can be easily accessed from a rear area of a motor vehicle. Advantageously, the stowage bin 712 of the present invention 700 does not interfere with movement of the cargo supporting structure 720. The stowage bin 712 further forms a means for further improving the aerodynamics of the vehicle article carrier 700 and provides an aesthetically pleasing implement that compliments the appearance of the vehicle article carrier 700.

## Claims

1. A vehicle article carrier (700) for supporting articles on a vehicle, comprising
a pair of side rails (706) adapted to be fixedly secured generally parallel to one another on a roof portion of the vehicle;
a pair of side supports (714) slidably disposed on said side rails (706);
a stowage bin (712) fixedly secured to said side supports (714) so as to overlay said roof portion of said vehicle,
**characterised in that** it further comprises
a cargo supporting structure (720) for supporting cargo thereon;
said cargo supporting structure (720) being pivotally secured to said side supports (714) and movable between a first position, wherein said cargo supporting structure (720) is disposed above said roof portion and said stowage bin (712) is positioned closely adjacent a forward longitudinal end of said roof portion, and a second position in which said cargo supporting structure (720) is positioned overlaying a rear lift gate (740) of said vehicle and said stowage bin (712) is positioned adjacent an upper rear end of said rear lift gate (740) of permit lifting of said lift gate; and
wherein said cargo supporting structure (720) and said stowage bin (712) are movable simultaneously between said first and second positions.

2. The vehicle article carrier (700) of claim 1, wherein said side rails (706) include mounting portions and said cargo supporting structure (720) includes securing assemblies (726) for securing said cargo supporting structure (720) to said side rails (706) when said cargo supporting structure (720) is moved into said first position.

3. The vehicle article carrier (700) of claim 2, further comprising at least one locking assembly disposed in a rear bumper (728) of said vehicle for engaging with one of said securing assemblies (726) for securing said cargo supporting structure (720) in said second position.

4. The vehicle article carrier (700) of claim 2, further comprising a pair of locking assemblies disposed in a rear bumper (728) of said vehicle for engaging with said securing assemblies (726) to secure said cargo supporting structure in said second position.

5. The vehicle article carrier (700) of claim 1, wherein said cargo supporting structure (720) includes a cross bar (724) supported between a pair of support tracks (722).

6. The vehicle article carrier (700) of claim 1, further including locking structure disposed adjacent a rear edge of said roof portion for engaging with said cargo supporting structure (720) and securing said cargo supporting structure (720) above said roof portion to permit lifting of said rear lift gate (740).

7. The vehicle article carrier (700) of claim 1, further comprising a decorative member (710) secureable to said roof portion adjacent a forward longitudinal end of said roof portion and extending between said side rails (706).

## Patentansprüche

1. Fahrzeuggepäckträger (700) zum Halten von Gepäck auf einem Fahrzeug, umfassend
ein Paar seitlicher Schienen (706), dafür geeignet, unbeweglich und im Wesentlichen parallel zueinander auf einem Dachabschnitt des Fahrzeuges befestigt zu werden;
ein paar seitlicher Stützen (714), gleitend auf den seitlichen Schienen (706) angeordnet;
einen Container (712), unbeweglich so an den seitlichen Stützen (714) befestigt, dass er sich über dem Dachabschnitt des Fahrzeugs befindet,
**dadurch gekennzeichnet, dass** er weiter umfasst:
ein Lastentraggestell (720), um Lasten darauf zu halten;
wobei das Lastentraggestell (720) schwenkbar an den seitlichen Stützen (714) befestigt ist und zwischen einer ersten Stellung, in der sich das Lastentraggestell (720) über dem Dachabschnitt befindet und der Container (712) eng an ein vorderes längsseitiges Ende des Dachabschnitts angrenzend positioniert ist, und einer zweiten Stellung bewegt werden kann, in der sich das Lastentraggestell (720) über einer hinteren Hebetür (740) befindet und der Container (712) an ein oberes hinteres Ende der hinteren Hebetür (740) angrenzend positioniert ist, um ein Hochheben der Hebetür zu ermöglichen; und
wobei das Lastentraggestell (720) und der Container (712) gleichzeitig zwischen der ersten und zweiten Stellung bewegt werden können.

2. Fahrzeuggepäckträger (700) nach Anspruch 1, **dadurch gekennzeichnet, dass** die seitlichen Schienen (706) Montageabschnitte einschliessen und das Lastentraggestell (720) Befestigungsausrüstungen (726) einschliesst, um das Lastentraggestell (720) an den seitlichen Schienen (706) zu befestigen, wenn das Lastentraggestell (720) in die erste Stellung bewegt wird.

3. Fahrzeuggepäckträger (700) nach Anspruch 2, weiter zumindest eine Verriegelungsausrüstung umfassend, die in einer hinteren Stossstange (728) des Fahrzeugs angeordnet ist, um in eine der Befestigungsausrüstungen (726) einzuklinken, um das Lastentraggestell (720) in der zweiten Stellung zu befestigen.

4. Fahrzeuggepäckträger (700) nach Anspruch 2, weiter ein Paar von Verriegelungsausrüstungen umfassend, die in einer hinteren Stossstange (728) des Fahrzeugs angeordnet sind, um in die Befestigungsausrüstungen (726) einzuklinken, um das Lastentraggestell in der zweiten Stellung zu befestigen.

5. Fahrzeuggepäckträger (700) nach Anspruch 1, **dadurch gekennzeichnet, dass** das Lastentraggestell (720) einen Quersteg (724) einschliesst, der zwischen einem Paar von Halteschienen (722) gehalten wird.

6. Fahrzeuggepäckträger (700) nach Anspruch 1, weiter eine Verriegelungsstruktur einschliessend, die an eine Hinterkante des Dachabschnitts angrenzend angeordnet ist, um in das Lastentraggestell (720) einzuklinken und das Lastentraggestell (720) über dem Dachabschnitt festzuhalten, um ein Anheben der hinteren Hebetür (740) zu ermöglichen.

7. Fahrzeuggepäckträger (700) nach Anspruch 1, weiter ein Schmuckelement (710) umfassend, das angrenzend an ein vorderes längsseitiges Ende des Dachabschnitts am Dachabschnitt befestigt werden kann und sich zwischen den seitlichen Schienen (706) erstreckt.

## Revendications

1. Support d'article pour véhicule (700) pour supporter des articles sur un véhicule, comprenant :
une paire de rails de côté (706) adaptés pour être fixés fermement de façon généralement parallèle l'un à l'autre sur une partie de toit du véhicule ;
une paire de supports de côté (714) disposés de manière coulissante sur lesdits rails de côté (706) ;
un coffre de rangement (712) fixés auxdits support de côté (714) de sorte à recouvrir ladite partie de toit dudit véhicule,
**caractérisée en ce qu'**il comprend en outre :
une structure qui supporte le chargement (720) pour supporter le chargement sur celle-là ;
ladite structure qui supporte le chargement (720) étant fixée de manière pivotante auxdits supports de côté (714) et étant mobile entre une première position, dans laquelle ladite structure qui supporte le chargement (720) est disposée au-dessus de la dite partie de toit et dans laquelle le coffre de rangement (712) est positionné étroitement adjacent à une extrémité longitudinale avant de ladite partie de toit, et une seconde position, dans laquelle ladite structure qui supporte le chargement (720) est positionnée de façon à recouvrir un hayon arrière (740) dudit véhicule et dans laquelle le coffre de rangement (712) est positionné adjacent à une extrémité arrière supérieure dudit hayon arrière (740) pour permettre le levage dudit hayon ; et
dans lequel ladite structure qui supporte le chargement (720) et ledit coffre de rangement (112) sont en même temps mobiles entre lesdites première et seconde positions.

2. Support d'article pour véhicule (700) selon la revendication 1, dans lequel lesdits rails de côté (706) incluent des parties de support et ladite structure qui supporte le chargement (720) inclut des assemblages de fixation (726) pour fixer ladite structure qui supporte le chargement (720) auxdits rails de côté (706) lorsque ladite structure qui supporte le chargement (720) est déplacée dans ladite première position.

3. Support d'article pour véhicule (700) selon la revendication 2, comprenant, en outre, au moins un assemblage de verrouillage disposé dans un pare-chocs arrière (728) dudit véhicule pour être en prise avec l'un desdits assemblages de fixation (726) pour fixer ladite structure qui supporte le chargement (720) dont ladite seconde position.

4. Support d'article pour véhicule (700) selon la revendication 2, comprenant, en outre, une paire d'assemblages de verrouillage disposés dans un pare-chocs arrière (728) dudit véhicule pour être en prise avec lesdits assemblages de fixation (726) pour fixer ladite structure qui supporte le chargement dont ladite seconde position.

5. Support d'article pour véhicule (700) selon la revendication 1, dans lequel ladite structure qui supporte le chargement (720) inclut une barre transversale (724) supportée entre une paire de rails de support (722).

6. Support d'article pour véhicule (700) selon la revendication 1, incluant, en outre, une structure de verrouillage disposée adjacente à un bord arrière de ladite partie de toit pour être en prise avec ladite structure qui supporte le chargement (720) et pour fixer ladite structure qui supporte le chargement (720) au-dessus de ladite partie de toit pour permettre le levage dudit hayon arrière (740).

7. Support d'article pour véhicule (700) selon la revendication 1, comprenant, en outre, un organe décoratif (710) qui peut être fixé à ladite partie de toit de façon adjacente à une extrémité longitudinale avant de ladite partie de toit et s'étendant entre lesdits rails de côté (710).
